(19) Europäisches Patentamt
European Patent Office
Office européen des brevets

(11) EP 2 274 398 B1

(12) # EUROPÄISCHE PATENTSCHRIFT

(45) Veröffentlichungstag und Bekanntmachung des Hinweises auf die Patenterteilung:
**27.01.2016 Patentblatt 2016/04**

(21) Anmeldenummer: **09729890.5**

(22) Anmeldetag: **07.04.2009**

(51) Int Cl.:
***C09K 8/584*** *(2006.01)* ***B01F 17/02*** *(2006.01)*
***B01F 17/42*** *(2006.01)*

(86) Internationale Anmeldenummer:
**PCT/EP2009/054119**

(87) Internationale Veröffentlichungsnummer:
**WO 2009/124922 (15.10.2009 Gazette 2009/42)**

(54) **NEUARTIGE TENSIDE FÜR DIE TERTIÄRE ERDÖLFÖRDERUNG AUF BASIS VON VERZWEIGTEN ALKOHOLEN**

NOVEL SURFACTANTS BASED ON BRANCHED ALCOHOLS FOR TERTIARY CRUDE OIL RECOVERY

NOUVEAUX TENSIOACTIFS À BASE D'ALCOOLS RAMIFIÉS, DESTINÉS À L'EXPLOITATION TERTIAIRE DE PÉTROLE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **10.04.2008 EP 08154303**
**04.06.2008 US 58743**

(43) Veröffentlichungstag der Anmeldung:
**19.01.2011 Patentblatt 2011/03**

(73) Patentinhaber: **BASF SE**
**67056 Ludwigshafen (DE)**

(72) Erfinder:
- **BITTNER, Christian**
  **64625 Bensheim (DE)**
- **OETTER, Günter**
  **67227 Frankenthal (DE)**
- **STEINBRENNER, Ulrich**
  **67435 Neustadt (DE)**
- **GUZMANN, Marcus**
  **69242 Mühlhausen (DE)**
- **HAUNERT, Andrea**
  **Singapore 098638 (SG)**
- **PAPP, Rainer**
  **67346 Speyer (DE)**
- **RUDOLPH, Jens**
  **67547 Worms (DE)**

(56) Entgegenhaltungen:
**EP-A- 0 003 183** **US-A- 5 849 960**
**US-A1- 2004 177 958**

- **A. SKAUGE ET AL.: "Optimization of a surfactant flooding process by core-flood experiments" JOURNAL OF PETROL SCIENCE AND ENGINEERING, Bd. 7, 1992, Seiten 117-130, XP002535838**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 274 398 B1

## Beschreibung

Die Erfindung betrifft Tenside der allgemeinen Formel $R^1$-X, wobei es sich bei $R^1$ um einen aliphatischen Alkylrest $C_{17}H_{35}$- und bei X um eine hydrophile Gruppe handelt, und der mittlere Verzweigungsgrad des Restes $R^1$ 2,8 bis 3,7 beträgt. Sie betrifft weiterhin Mischungen, welche derartige Tenside enthalten, sowie die Verwendung derartiger Tenside bzw. deren Mischungen zur tertiären Erdölförderung.

In natürlichen Erdölvorkommen liegt Erdöl in den Hohlräumen poröser Speichergesteine vor, welche zur Erdoberfläche hin von undurchlässigen Deckschichten abgeschlossen sind. Bei den Hohlräumen kann es sich um sehr feine Hohlräume, Kapillaren, Poren oder dergleichen handeln. Feine Porenhälse können beispielsweise einen Durchmesser von nur ca. 1 μm aufweisen. Neben Erdöl, inklusive Anteilen von Erdgas enthält eine Lagerstätte mehr oder weniger stark salzhaltiges Wasser. Der Salzgehalt von Lagerstättenwasser beträgt nicht selten 5 bis 20 Gew. %; es gibt aber auch Lagerstätten mit einem Salzgehalt von bis zu 27 Gew. %. Bei den gelösten Salzen kann es sich beispielsweise um Alkalimetallsalze handeln, in manchen Lagerstätten enthält das Lagerstättenwasser aber auch über relative hohe Anteile an Erdalkalimetallionen, beispielsweise bis zu 5 Gew. % Calciumionen und/oder Magnesiumionen.

Bei der Erdölförderung unterscheidet man zwischen der primären, sekundären und tertiären Förderung.

Bei der primären Förderung strömt das Erdöl nach dem Anbohren der Lagerstätte aufgrund des Eigendrucks der Lagerstätte von selbst durch das Bohrloch an die Oberfläche. Der Eigendruck kann durch in der Lagerstätte vorhandene Gase wie Methan, Ethan oder Propan hervorgerufen werden. Mittels der primären Förderung lassen sich je nach Lagerstättentyp aber meist nur ca. 5 bis 10% der in der Lagerstätte vorhandenen Erdölmenge fördern, danach reicht der Eigendruck nicht mehr zur Förderung.

Nach der primären Förderung kommt daher die sekundäre Förderung zum Einsatz. Bei der sekundären Förderung werden zusätzlich zu den Bohrlöchern, welche der Förderung des Erdöls dienen, den sogenannten Produktionsbohrungen, weitere Bohrlöcher in die erdölführende Formation gebohrt. Durch diese sogenannten Injektionsbohrungen wird Wasser in die Lagerstätte eingepresst, um den Druck aufrechtzuerhalten oder wieder zu erhöhen. Durch das Einpressen des Wassers wird das Erdöl durch die Hohlräume in der Formation langsam von der Injektionsbohrung ausgehend in Richtung der Produktionsbohrung gedrückt. Dies funktioniert aber nur so lange, wie die Hohlräume vollständig mit Öl gefüllt sind und das viskosere Öl durch das Wasser vor sich her geschoben wird (siehe Abbildung 1). Sobald das dünnflüssige Wasser durch Hohlräume durchbricht, strömt es ab diesem Zeitpunkt auf dem Weg des geringsten Widerstandes, also durch den gebildeten Kanal und schiebt nicht mehr das Öl vor sich her. Diese Situation ist in Abbildung 2 dargestellt: Aufgrund der unterschiedlichen Polarität von Öl und Wasser ergibt sich zwischen beiden Komponenten eine hohe Grenzflächenenergie bzw. Grenzflächenspannung. Daher nehmen beide zueinander die kleinste Kontaktfläche ein, was in einem kugelförmigen Öltropfen resultiert, welcher nicht mehr durch die feinen Kapillaren passt. Am Ende des Wasserflutens ist das Öl also in diskontinuierlicher Form (vereinzelte Kugeltropfen) in den Kapillaren gefangen.

Mittels primärer und sekundärer Förderung sind im Regelfalle nur ca. 30 bis 35 % der in der Lagerstätte vorhandenen Erdölmenge zu fördern.

Es ist bekannt, die Erdölausbeute durch Maßnahmen der tertiären Ölförderung weiter zu steigern. Eine Übersicht zur tertiären Ölförderung findet sich beispielsweise im Journal of Petroleum Science and Engineering 19 (1998) 265-280. Zur tertiären Ölförderung gehören Wärmeverfahren, bei denen Heißwasser oder Heißdampf in die Lagerstätte eingepresst wird. Hierdurch wird die Viskosität des Öls herabgesetzt. Als Flutmedium können auch Gase wie $CO_2$ oder Stickstoff Einsatz finden.

Zur tertiären Erdölförderung gehören weiterhin Verfahren, bei denen man geeignete Chemikalien als Hilfsmittel zur Ölförderung einsetzt. Mit diesen lässt sich die Situation gegen Ende des Wasserflutens beeinflussen und dadurch auch bis dahin in der Gesteinformation festgehaltenes Erdöl fördern.

Auf das Erdöl, welches gegen Ende der sekundären Förderung in den Poren des Lagerstättengesteins gefangen ist, wirken viskose und kapillare Kräfte, wobei das Verhältnis dieser beiden Kräfte zueinander die mikroskopische Ölentfernung bestimmt. Mittels eines dimensionslose Parameters, der sogenannten Kapillarzahl, wird das Einwirken dieser Kräfte beschrieben. Sie ist das Verhältnis der Viskositätskräfte (Geschwindigkeit x Viskosität der drückenden Phase) zu den Kapillarkräften (Grenzflächenspannung zwischen Öl und Wasser x Benetzung des Gesteins):

$$N_c = \frac{\mu\nu}{\sigma \cos\theta} .$$

Dabei bedeutet μ die Viskosität des Erdöl mobilisierenden Fluids, ν die Darcy-Geschwindigkeit (Durchfluss pro Flächeneinheit), σ die Grenzflächenspannung zwischen Erdöl mobilisierender Flüssigkeit und Erdöl und θ der Kontaktwinkel zwischen Erdöl und dem Gestein (C. Melrose, C.F. Brandner, J. Canadian Petr. Techn. 58, Oct.-Dez., 1974). Je höher die Kapillarzahl, desto größer die Mobilisierung des Öls und somit auch der Entölungsgrad.

Es ist bekannt, dass die Kapillaritätszahl gegen Ende der sekundären Erdölförderung im Bereich von etwa $10^{-6}$ liegt und dass es notwendig ist, die Kapillaritätszahl auf etwa $10^{-3}$ bis $10^{-2}$ zu erhöhen, um zusätzliches Erdöl mobilisieren zu können.

Hierzu kann man beispielsweise die Grenzflächenspannung $\sigma$ zwischen dem Erdöl und der wässrigen Phase durch den Zusatz von geeigneten Tensiden absenken. Diese Technik ist auch als "Tensidfluten" bekannt. Hierzu eignen sich insbesondere Tenside, welche $\sigma$ auf Werte von < $10^{-2}$ mN/m (ultralow interfacial tension) herabsetzen können. Auf diese Art und Weise lassen sich die Öltröpfchen in ihrer Form verändern und durch das Flutwasser durch die Kapillaröffnungen hindurchzwängen.

Es ist erwünscht, dass die Öltröpfchen sich anschließend zu einer kontinuierlichen Ölbank zu vereinen. Dies ist schematisch in Abbildung 3 gezeigt. Dies hat zweierlei Vorteile: Zum einen können beim Voranschreiten der kontinuierlichen Ölbank durch neues poröses Gestein, die sich dort befindlichen Öltropfen mit der Bank verschmelzen. Weiterhin wird durch die Vereinigung der Öltropfen zu einer Ölbank die Öl-Wasser-Grenzfläche deutlich verringert und somit nicht mehr benötigtes Tensid freigesetzt. Das freigesetzte Tensid kann danach in der Formation verbliebene Öltropfen mobilisieren. Dies ist schematisch in Abbildung 4 gezeigt. Auch zur Vereinigung der Öltropfen zu einer Ölbank sowie zur Aufnahme neuer Öltropfen in die Ölbank ist eine utraniedrige Grenzflächenspannung zwischen der Wasser- und der Ölphase erforderlich. Ansonsten bleiben einzelne Öltropfen zurück oder werden nicht in die Ölbank mit aufgenommen. Dies schmältert die Effizienz des Tensidflutens.

Im Allgemeinen wird nach dem Tensidfluten zur Aufrechterhaltung des Drucks nicht Wasser in die Formation injiziert, sondern eine höherviskose, wässrige Lösung eines stark verdickend wirkenden Polymers. Diese Technik ist als "Polymerfluten" bekannt.

Beim Tensidfluten sollen die Tenside mit der Wasser- und der Ölphase eine Mikroemulsion (Winsor Typ III) bilden. Bei einer Mikroemulsion (Winsor Typ III) handelt es sich nicht um eine Emulsion mit besonders kleinen Tröpfchen, sondern um eine thermodynamisch stabile, flüssige Mischung von Wasser, Öl und Tensiden, welche eine sehr niedrige Grenzflächenspannung aufweist und meist über eine niedrige Viskosität verfügt. Sie steht mit überschüssigem Wasser und überschüssigem Öl im Gleichgewicht. Eine niedrige Viskosität ist wünschenswert zum Transport der Emulsion in der Erdölformation. Bei einer zu hohen Viskosität der zu transportierenden Phase müsste im Zuge des Polymerflutens ein sehr hoher Druck aufgewandt werden. Dies ist einerseits teuer, vor allem besteht aber auch die Gefahr, dass durch den Druck unerwünschterweise neue Hohlräume in die Erdölformation gesprengt werden. Desweiteren wird eine Vereinigung der mobilisierten Öltröpfchen zu einer kontinuierlichen Ölbank im Falle zu hoher Viskositäten behindert.

Die Anforderungen an Tenside für die tertiäre Erdölförderung unterscheiden sich deutlich von den Anforderungen an Tenside für andere Anwendungen.

Die Tenside sollen die Grenzflächenspannung zwischen Wasser und Öl (üblicherweise ca. 20 mN/m) auf besonders niedrige Werte von weniger als $10^{-2}$mN/m reduzieren, um eine ausreichende Mobilisierung des Erdöls zu ermöglichen. Dies muss bei den üblichen Lagerstättentemperaturen von ca. 30°C bis ca. 130°C und in Gegenwart von stark salzhaltigem Wasser, insbesondere auch in Gegenwart von hohen Anteilen von Calcium- und/oder Magnesiumionen erfolgen; die Tenside müssen also auch in stark salzhaltigem Lagerstättenwasser löslich sein. Das Temperaturfenster, innerhalb dessen sich eine Mikroemulsion bildet, sollte dabei möglichst breit sein. Zur Vermeidung von Tensidverlusten in der Formation sollten die Tenside eine geringe Neigung zur Ausbildung von viskosen oder großen Tensidüberstrukturen haben sowie ein geringes Adsorptionsverhalten aufweisen. Weiterhin sollen die Tenside eine hohe chemische Stabilität unter den in der Formation herrschenden Bedingungen aufweisen. Hierzu zählt vor allem eine hohe Langzeitstabilität: Die Wanderungsgeschwindigkeit der Tensidflut in der Formation beträgt oft weniger als 1 m/Tag. Je nach dem Abstand zwischen Injektions- und Förderbohrung können daher die Verweilzeiten des Tensids in der Erdöllagerstätte mehrere Monate betragen.

Zum Einsatz bei der tertiären Erdölförderung sind bereits verschiedene Tenside bzw. Mischungen von Tensiden vorgeschlagen worden.

US 3,811,505 offenbart eine Mischung aus einem anionischen und einem nichtionischen Tensid zum Einsatz in Lagerstätten, deren Lagerstättenwasser 0,5 bis 0,9 Gew. % mehrwertige Ionen enthält. Bei den anionischen Tensiden handelt es sich um Alkylsulfonate oder Alkylphosphate mit jeweils 5 bis 25 C-Atomen, Alkylarylsulfonate oder Alkylarylsulfonate, deren Alkylrest jeweils 5 bis 25 C-Atome aufweist. Bei den nichtionischen Tensiden handelt es sich um polyethoxylierte Alkylphenole, welche 6 bis 20 Ethoxygruppen aufweisen und deren Alkylrest 5 bis 20 C-Atome aufweist oder um polyethoxylierte aliphatische Alkohole mit 6 bis 20 C-Atomen und 6 bis 20 Ethoxygruppen.

US 3,811,504 offenbart eine Mischung aus 2 verschiedenen anionischen Tensiden und einem nichtionischen Tensid zum Einsatz in Lagerstätten, deren Lagerstättenwasser 0,15 bis 1,2 % Calcium- und Magnesiumionen enthält. Bei dem ersten anionischen Tensid handelt es sich um Alkyl- oder Alkylarylsulfonate, bei dem zweiten um Alkylpolyethoxysulfate und bei dem nichtionischen Tensid um polyethoxylierte aliphatische oder aromatische Alkohole. Ähnlich zusammengesetzte Tensidmischungen sind beispielsweise von US 3,508,621, US 3,811,507 oder 3,890,239 offenbart.

US 4,077,471 offenbart eine Tensidmischung zum Einsatz in einer Formation, deren Lagerstättenwasser einen Salzgehalt von 7 bis 22 % aufweist. Die Mischung umfasst ein wasserlösliches Alkylpolyalkoxyalkylsulfonat oder Alkylarylpolyalkoxyalkylsulfonat sowie ein wasserunlösliches nichtionisches Tensid aus einem ethoxylierten aliphatischen Alkohol oder einem ethoxylierten, alkylsubstituierten aromatischen Alkohol.

EP 003 183 B1 offenbart Tenside der allgemeinen Formel R-O-Polypropoxy-Polyethoxy-X, wobei X eine Sulfat-, Sulfonat-, Phosphat- oder Carbonsäuregruppe ist. Bei R kann es sich in einer bevorzugten Ausführungsform der Erfindung um einen verzweigten Alkylrest mit 10 bis 16 C-Atomen handeln, beispielsweise um einen Isotridecylrest.

US 3,675,716 offenbart eine Mischung aus einem anionischen Tensid und einem verzweigten alkoxylierten Alkoholsulfat, wobei die Verzweigungsstelle nicht mehr als ein C-Atom von dem C-Atom entfernt ist, an welches die Sulfatgruppe angebunden ist.

US 5,849,960 offenbart verzweigte Alkohole mit 8 bis 36 C-Atomen. Der Verzweigungsgrad beträgt mindestens 0,7 und bevorzugt 1,5 bis 2,3, wobei weniger als 0,5 % quartäre C-Atome anwesend sind, und die Verzweigungen Methyl- und Ethylgruppen umfassen. Beschrieben wird weiterhin die Weiterverarbeitung der Alkohole zu entsprechenden Tensiden, und zwar Alkoxylaten, Sulfaten oder Alkoxysulfaten sowie deren Verwendung zur Herstellung biologisch abbaubarer Waschmittel.

EP 958 267 B1 offenbart verzweigte Alkohole mit 11 bis 36 C-Atomen. Der Verzweigungsgrad beträgt mindestens 0,7 bis 3,0, bevorzugt 1,5 bis 2,3, wobei weniger als 0,5 % quartäre C-Atome anwesend sind, und die Verzweigungen Methyl- und Ethylgruppen umfassen. Beschrieben wird weiterhin die Weiterverarbeitung der Alkohole zu entsprechenden Tensiden, und zwar Alkoxylaten, Sulfaten oder Alkoxysulfaten sowie deren Verwendung zur Herstellung biologisch abbaubarer Waschmittel.

US 6,222,077 offenbart ein Verfahren zur Herstellung von Tensiden, bei dem man lineare $C_6$- bis $C_{10}$-Olefine zu $C_{12}$- bis $C_{20}$-Olefinen dimerisiert, die erhaltenen Olefine zu $C_{13}$- bis $C_{21}$-Alkoholen umsetzt und die Alkohole zu entsprechenden, verzweigten Tensiden umsetzt werden. Der mittlere Verzweigungsgrad der Alkohole beträgt 0,9 bis 2,0, wobei weniger als 25 % der Verzweigungen in $C_2$- oder $C_3$-Position zur OH-Gruppe angeordnet sind.

US 2006/0185845 A1 offenbart die Verwendung einer Mischung aus mindestens einem aliphatischen anionischen Tensid und einem verzweigten aliphatischen nichtionischen Tensid für die Erdölförderung. Der verzweigte aliphatische Rest weist bevorzugt 10 bis 24 C-Atome auf und der Verzweigungsgrad beträgt 0,7 bis 2,5.

US 2006/018486 offenbart die Verwendung einer Mischung aus mindestens einem verzweigten aliphatischen anionischen Tensid und einem aliphatischen nichtionischen Tensid für die Erdölförderung. Der verzweigte aliphatische Rest weist bevorzugt 10 bis 24 C-Atome auf und der Verzweigungsgrad beträgt 0,7 bis 2,5

Aufgabe der Erfindung war es, verbesserte Tenside für die tertiäre Erdölförderung bereit zu stellen.

Dementsprechend wurden Tenside der allgemeinen Formel $R^1$-X gefunden, wobei es sich bei $R^1$ um einen aliphatischen Alkylrest $C_{17}H_{35}$- und bei X um eine hydrophile Gruppe handelt und der mittlere Verzweigungsgrad des Restes $R^1$ 2,8 bis 3,7, bevorzugt 2,9 bis 3,6 beträgt.

In einer bevorzugten Ausführungsform der Erfindung handelt es sich bei X um eine Gruppe ausgewählt aus der Gruppe von Sulfonatgruppen, Polyoxyalkylengruppen, anionisch modifizierten Polyoxyalkylengruppen, Glucosidgruppen oder Aminoxidgruppen.

In einer weiteren bevorzugten Ausführungsform der Erfindung handelt es sich um Tensidmischungen aus mindestens zwei unterschiedlichen Tensiden, wobei es sich bei mindestens einem davon um ein Tensid $R^1$-X handelt.

Weiterhin wurde die Verwendung von Tensiden $R^1$-X bzw. Mischungen davon zur tertiären Erdölförderung gefunden.

Beigefügte Abbildungen:

Abb. 1 Situation zu Beginn der sekundären Ölförderung: Vollständig mit Öl gefüllte Gesteinspore.

Abb. 2 Situation gegen Ende der sekundären Ölförderung: Das Flutwasser hat einen Kanal gebildet und strömt durch den Kanal, ohne weiteres Öl mitzunehmen.

Abb. 3 Schematische Darstellung des Tensidflutens in einer Erdölformation: Aus den Gesteinsporen freigesetzte Öltröpfchen vor (A) und nach (B) der Vereinigung zu einer kontinuierlichen Ölbank.

Abb. 4 Schematische Darstellung des Voranschreitens der kontinuierlichen Ölbank in der Erdölformation. Die Ölbank nimmt in Stromrichtung neue Öltröpfchen auf. Entgegen der Stromrichtung wird Tensid freigesetzt.

Zu der Erfindung ist im Einzelnen das Folgende auszuführen:

Bei den erfindungsgemäßen Tensiden handelt es sich um Tenside der allgemeinen Formel $R^1$-X, wobei es sich bei $R^1$ um einen verzweigten aliphatischen Alkylrest $C_{17}H_{35}$-handelt, dessen mittlerer Verzweigungsgrad 2,8 bis 3,7 beträgt. Bevorzugt beträgt der Verzeigungsgrad 2,9 bis 3,6, besonders bevorzugt 3,01 bis 3,5, ganz besonders bevorzugt 3,05 bis 3,4 und beispielsweise etwa 3,1.

Bei X handelt es sich um eine hydrophile Gruppe, welche dem Molekül amphiphile Eigenschaften verleiht. Es kann sich prinzipiell um beliebige hydrophile Gruppen handeln, welche zum Einsatz als Kopfgruppen in Tensiden geeignet sind. Dem Fachmann sind entsprechende hydrophile Gruppen bekannt.

Die Tenside können ausgehend von einem verzweigten aliphatischen Alkohol $R^1$-OH mit einem Verzweigungsgrad von 2,8 bis 3,7, bevorzugt 2,9 bis 3,6, besonders bevorzugt 3,01 bis 3,5 ganz besonders bevorzugt 3,05 bis 3,4 und beispielsweise etwa 3,1 hergestellt werden.

Der Begriff "Verzweigungsgrad" wird hierbei in prinzipiell bekannter Art und Weise als die Zahl der Methylgruppen in einem Molekül des Alkohols abzüglich 1 definiert. Der mittlere Verzweigungsgrad ist der statistische Mittelwert der Verzweigungsgrade aller Moleküle einer Probe. Mit anderen Worten gesagt, kann es sich bei dem eingesetzten Alkohol $R^1$-OH um ein Gemisch verschiedener Alkohole handeln, und dementsprechend auch bei den erfindungsgemäßen Tensiden um ein Gemisch verschiedener Tenside, welche jeweils unterschiedliche aliphatische Alkylreste $C_{17}H_{35}$- aufweisen.

Der mittlere Verwzweigungsgrad kann wie folgt $^1$H-NMR-spektroskopisch ermittelt werden: Dazu wird eine Probe des Alkohols zunächst einer Derivatisierung mit Trichloracetylisocyanat (TAI) unterzogen. Dabei werden die Alkohole in die Carbaminsäureester überführt. Die Signale der veresterten primären Alkohole liegen bei $\delta$= 4,7 bis 4,0 ppm, die der (soweit vorhanden) veresterten sekundären Alkohole bei etwa 5 ppm und in der Probe vorhandenes Wasser reagiert mit TAI zur Carbaminsäure ab. Alle Methyl-, Methylen- und Methinprotonen liegen im Bereich von 2,4 bis 0,4 ppm. Die Signale < 1 ppm sind dabei den Methylgruppen zugeordnet. Aus dem so erhalten Spektrum läßt sich der mittlere Verzweigungsgräd (Iso-Index) wie folgt berechnen:

$$\text{Iso-Index} = ((F(CH_3) / 3) / (F(CH_2\text{-}OH) / 2)) - 1$$

wobei $F(CH_3)$ für die den Methylprotonen entsprechende Signalfläche und $F(CH_2$-OH) für die Signalfläche der Methylenprotonen in der $CH_2$-OH-Gruppe steht.

Bereitstellung der verwendeten Alkohole $R^1$-OH

Die Alkohole $R^1$-OH können grundsätzlich nach jedem beliebigen Verfahren synthetisiert werden, sofern sie jeweils den beschriebenen Verzweigungsgrad aufweisen.

Alkohole $R^1$-OH können beispielsweise aus einem verzweigten $C_{16}$-Olefin durch Hydroformylierung gefolgt von Hydrierung des erhaltenen Aldehyds zum Alkohol erhalten werden. Die Durchführung einer Hydroformylierung sowie der nachfolgenden Hydrierung ist dem Fachmann prinzipiell bekannt. Die hierzu eingesetzten $C_{16}$-Olefine können durch Tetramerisierung von Buten hergestellt werden.

Bevorzugt kann das $C_{17}$-Alkoholgemisch hergestellt werden, indem man

a) ein Kohlenwasserstoffeinsatzmaterial bereitstellt, das wenigstens ein Olefin mit 2 bis 6 Kohlenstoffatomen enthält,

b) das Kohlenwasserstoffeinsatzmaterial einer Oligomerisierung an einem Übergangsmetall-haltigen Katalysator unterwirft,

c) das in Schritt b) erhaltene Oligomerisierungsprodukt einer destillativen Auftrennung unter Erhalt eines an $C_{16}$-Olefinen angereicherten Olefinstroms unterzieht,

d) den in Schritt c) erhaltenen an $C_{16}$-Olefinen angereicherten Olefinstrom einer Hydroformylierung durch Umsetzung mit Kohlenmonoxid und Wasserstoff in Gegenwart eines Cobalt-Hydroformylierungskatalysators und anschließend einer Hydrierung unterzieht.

Schritt a) Bereitstellung eines Kohlenwasserstoffgemischs

Geeignete Olefin-Einsatzmaterialien für Schritt a) sind prinzipiell alle Verbindungen, welche 2 bis 6 Kohlenstoffatome und wenigstens eine ethylenisch ungesättigte Doppelbindung enthalten. Vorzugsweise wird in Schritt a) ein technisch zur Verfügung stehendes olefinhaltiges Kohlenwasserstoffgemisch eingesetzt.

Bevorzugte großtechnisch zur Verfügung stehende Olefingemische resultieren aus der Kohlenwasserstoff-Spaltung bei der Erdölverarbeitung, beispielsweise durch Katcracken, wie Fluid Catalytic Cracking (FCC), Thermocracken oder Hydrocracken mit anschließender Dehydrierung. Ein bevorzugtes technisches Olefingemisch ist der $C_4$-Schnitt. $C_4$-Schnitte sind beispielsweise durch Fluid Catalytic Cracking oder Steamcracken von Gasöl bzw. durch

Steamcracken von Naphtha erhältlich. Je nach Zusammensetzung des $C_4$-Schnitts unterscheidet man den Gesamt-$C_4$-Schnitt (Roh-$C_4$-Schnitt), das nach der Abtrennung von 1,3-Butadien erhaltene so genannte Raffinat I sowie das nach der Isobutenabtrennung erhaltene Raffinat II. Ein weiteres geeignetes technisches Olefingemisch ist der bei der Naphtha-Spaltung erhältliche $C_5$-Schnitt. Für den Einsatz in Schritt a) geeignete olefinhaltige Kohlenwasserstoffgemische mit 4 bis 6 Kohlenstoffatomen lassen sich weiterhin durch katalytische Dehydrierung geeigneter großtechnisch zur Verfügung stehender Paraffingemische erhalten. So gelingt beispielsweise die Herstellung von $C_4$-Olefin-Gemischen aus Flüssiggasen (liquified petroleum gas, LPG) und verflüssigbaren Erdgasen (liquified natural gas, LNG). Letztere umfassen neben der LPG-Fraktion auch zusätzlich größere Mengen höhermolekularer Kohlenwasserstoffe (leichtes Naphtha) und eignen sich somit auch zur Herstellung von $C_5$- und $C_6$-Olefin-Gemischen. Die Herstellung von olefinhaltigen Kohlenwasserstoffgemischen, die Monoolefine mit 4 bis 6 Kohlenstoffatomen enthalten, aus LPG- oder LNG-Strömen gelingt nach üblichen, dem Fachmann bekannten Verfahren, die neben der Dehydrierung in der Regel noch einen oder mehrere Aufarbeitungsschritte umfassen. Dazu zählt beispielsweise die Abtrennung wenigstens eines Teils der in den zuvor genannten Olefin-Einsatzgemischen enthaltenen gesättigten Kohlenwasserstoffe. Diese können beispielsweise erneut zur Herstellung von OlefinEinsatzmaterialien durch Crackung und/oder Dehydrierung eingesetzt werden. Die in Schritt a) eingesetzten Olefine können jedoch auch einen Anteil gesättigter Kohlenwasserstoffe enthalten, die sich gegenüber den Oligomerisierungsbedingungen inert verhalten. Der Anteil dieser gesättigten Komponenten beträgt im Allgemeinen höchstens 60 Gew.-%, bevorzugt höchstens 40 Gew.-%, besonders bevorzugt höchstens 20 Gew.-%, bezogen auf die Gesamtmenge der in dem Kohlenwasserstoff-Einsatzmaterial enthaltenen Olefine und gesättigten Kohlenwasserstoffe.

Vorzugsweise wird in Schritt a) ein Kohlenwasserstoffgemisch bereitgestellt, das 20 bis 100 Gew.-% $C_4$-Olefine, 0 bis 80 Gew.-% $C_5$-Olefine, 0 bis 60 Gew.-% $C_6$-Olefine und 0 bis 10 Gew.-% von den zuvor genannten Olefinen verschiedene Olefine, jeweils bezogen auf den Gesamtolefingehalt, enthält.

Vorzugsweise wird in Schritt a) ein Kohlenwasserstoffgemisch bereitgestellt, das einen Gehalt an linearen Monoolefinen von mindestens 80 Gew.-%, besonders bevorzugt mindestens 90 Gew.-% und insbesondere mindestens 95 Gew.-%, bezogen auf den Gesamtolefingehalt, aufweist. Dabei sind die linearen Monoolefine ausgewählt unter 1-Buten, 2-Buten, 1-Penten, 2-Penten, 1-Hexen, 2-Hexen, 3-Hexen und Mischungen davon. Zur Einstellung des gewünschten Verzweigungsgrades des Isoalkangemischs kann es von Vorteil sein, wenn das in Schritt a) eingesetzte Kohlenwasserstoffgemisch bis zu 20 Gew.-%, bevorzugt bis zu 5 Gew.-%, insbesondere bis zu 3 Gew.-% verzweigte Olefine, bezogen auf den Gesamtolefingehalt, enthält.

Besonders bevorzugt wird in Schritt a) ein $C_4$-Kohlenwasserstoffgemisch bereitgestellt.

Der Butengehalt, bezogen auf 1-Buten, 2-Buten und Isobuten, des in Schritt a) bereitgestellten $C_4$-Kohlenwasserstoffgemischs beträgt vorzugsweise 10 bis 100 Gew.-%, besonders bevorzugt 50 bis 99 Gew.-%, und insbesondere 70 bis 95 Gew.-%, bezogen auf den Gesamtolefingehalt. Vorzugsweise liegt das Verhältnis von 1-Buten zu 2-Buten in einem Bereich von 20 : 1 bis 1 : 2, insbesondere bei etwa 10 : 1 bis 1 : 1. Vorzugsweise enthält das in Schritt a) eingesetzte $C_4$-Kohlenwasserstoffgemisch weniger als 5 Gew.-%, insbesondere weniger als 3 Gew.-% Isobuten.

Die Bereitstellung der olefinhaltigen Kohlenwasserstoffe in Schritt a) kann eine Abtrennung von verzweigten Olefinen umfassen. Geeignet sind übliche, aus dem Stand der Technik bekannte Abtrennverfahren, die auf unterschiedlichen physikalischen Eigenschaften von linearen und verzweigten Olefinen bzw. auf unterschiedlichen Reaktivitäten, die selektive Umsetzungen ermöglichen, beruhen. So kann beispielsweise Isobuten von $C_4$-Olefingemischen, wie Raffinat I, durch eine der folgenden Methoden abgetrennt werden: Molsiebtrennung, fraktionierte Destillation, reversible Hydratisierung zu tert.-Butanol, sauer katalysierte Alkohol-Addition an einen tertiären Ether, z. B. Methanol-Addition zu Methyl-tert.-butylether (MTBE), irreversible katalysierte Oligomerisierung zu Di- und Tri-Isobuten oder rreversible Polymerisation zu Polyisobuten. Derartige Verfahren sind in K. Weissermel, H.-J. Arpe, Industrielle organische Chemie, 4. Auflage, S. 76 - 81, VCH-Verlagsgesellschaft Weinheim, 1994 beschrieben, worauf hier in vollem Umfang Bezug genommen wird.

Vorzugsweise wird in Schritt a) ein Raffinat II bereitgestellt.

Ein zum Einsatz im Verfahren geeignetes Raffinat II hat beispielsweise die folgende Zusammensetzung: 0,5 bis 5 Gew.-% Isobutan, 5 bis 20 Gew.-% n-Butan, 20 bis 40 Gew.-% trans-2-Buten, 10 bis 20 Gew.-% cis-2-Buten, 25 bis 55 Gew.-% 1-Buten, 0,5 bis 5 Gew.-% Isobuten sowie Spurengase, wie beispielsweise 1,3-Butadien, Propen, Propan, Cyclopropan, Propadien, Methylcyclopropan, Vinylacetylen, Pentene, Pentane im Bereich von jeweils maximal 1 Gew.-%.

Ein besonders geeignetes Raffinat II weist folgende typische Zusammensetzung auf: i-Butan: 3 Gew.-%, n-Butan: 15 Gew.-%, i-Buten: 2 Gew.-%, Buten-1: 30 Gew.-%, Buten-2-trans: 32 Gew.-%, Buten-2-cis:18 Gew.-%.

Sind Diolefine oder Alkine in dem olefinreichen Kohlenwasserstoffgemisch vorhanden, so können diese vor der Oligomerisierung auf vorzugsweise weniger als 100 ppm aus demselben entfernt werden. Sie werden bevorzugt durch selektive Hydrierung, z. B. gemäß EP-81 041 und DE-15 68 542 entfernt, besonders bevorzugt durch eine selektive Hydrierung bis auf einen Restgehalt von unter 50 ppm.

Aus dem olefinreichen Kohlenwasserstoffgemisch werden zweckmäßigerweise außerdem sauerstoffhaltige

Verbindungen, wie Alkohole, Aldehyde, Ketone oder Ether weitgehend entfernt. Hierzu kann das olefinreiche Kohlenwasserstoffgemisch mit Vorteil über ein Adsorptionsmittel, wie z. B. ein Molekularsieb, insbesondere eines mit einem Porendurchmesser von > 4 Å bis 5 Å, geleitet werden. Die Konzentration an sauerstoffhaltigen, schwefelhaltigen, stickstoffhaltigen und halogenhaltigen Verbindungen im olefinreichen Kohlenwasserstoffgemisch beträgt vorzugsweise weniger als 1 Gew.-ppm, insbesondere weniger als 0,5 Gew.-ppm.

Schritt b) Oligomerisierung

Im Rahmen des beschriebenen Herstellungsverfahrens für $C_{17}$-Alkohole umfasst der Begriff "Oligomere" Dimere, Trimere, Tetramere, Pentamere und höhere Produkte aus der Aufbaureaktion der eingesetzten Olefine. Die Oligomere sind ihrerseits olefinisch ungesättigt. Durch geeignete Wahl des zur Oligomerisierung eingesetzten Kohlenwasserstoffeinsatzmaterials und des Oligomerisierungskatalysators, wie im Folgenden beschrieben, kann ein Oligomerisierungsprodukt erhalten werden, dass $C_{16}$-Olefine enthält, die sich vorteilhaft zu dem erfindungsgemäß verwendeten $C_{17}$-Alkoholgemisch weiterverarbeiten lassen.

Zur Oligomerisierung in Schritt b) kann ein Reaktionssystem eingesetzt werden, das einen oder mehrere, gleiche oder verschiedene Reaktoren umfasst. Im einfachsten Fall wird zur Oligomerisierung in Schritt b) ein einzelner Reaktor eingesetzt. Es können jedoch auch mehrere Reaktoren eingesetzt werden, die jeweils gleiche oder verschiedene Vermischungscharakteristiken aufweisen. Die einzelnen Reaktoren können optional durch Einbauten ein- oder mehrfach unterteilt sein. Bilden zwei oder mehrere Reaktoren das Reaktionssystem, so können diese untereinander beliebig verschaltet sein, z. B. parallel oder in Reihe. In einer geeigneten Ausführung wird z.B. ein Reaktionssystem eingesetzt, das aus zwei in Reihe geschalteten Reaktoren besteht.

Geeignete druckfeste Reaktionsapparaturen für die Oligomerisierung sind dem Fachmann bekannt. Dazu zählen die allgemein üblichen Reaktoren für Gas-fest- und Gasflüssig-Reaktionen, wie z. B. Rohrreaktoren, Rührkessel, Gasumlaufreaktoren, Blasensäulen etc., die gegebenenfalls durch Einbauten unterteilt sein können. Vorzugsweise werden Rohrbündelreaktoren oder Schachtöfen eingesetzt. Wird zur Oligomerisierung ein heterogener Katalysator eingesetzt, so kann dieser in einem einzigen oder in mehreren Katalysator-Festbetten angeordnet sein. Dabei ist es möglich, in verschiedenen Reaktionszonen unterschiedliche Katalysatoren einzusetzen. Bevorzugt ist jedoch der Einsatz des gleichen Katalysators in allen Reaktionszonen.

Die Temperatur bei der Oligomerisierungsreaktion liegt im Allgemeinen in einem Bereich von etwa 20 bis 280 °C, bevorzugt von 25 bis 200 °C, insbesondere von 30 bis 140 °C. Der Druck bei der Oligomerisierung liegt im Allgemeinen in einem Bereich von etwa 1 bis 300 bar, vorzugsweise von 5 bis 100 bar und insbesondere von 20 bis 70 bar. Umfasst das Reaktionssystem mehr als einen Reaktor, so können diese gleiche oder verschiedene Temperaturen und gleiche oder verschiedene Drücke aufweisen. So kann beispielsweise im zweiten Reaktor einer Reaktorkaskade eine höhere Temperatur und/oder ein höherer Druck als im ersten Reaktor eingestellt werden, z. B. um einen möglichst vollständigen Umsatz zu erzielen.

In einer speziellen Ausführung werden die zur Oligomerisierung eingesetzten Temperatur und Druckwerte so gewählt, dass das olefinhaltige Einsatzmaterial flüssig oder im überkritischen Zustand vorliegt.

Die Umsetzung in Schritt b) wird vorzugsweise adiabatisch durchgeführt. Dieser Begriff wird im Folgenden im technischen und nicht im physiko-chemischen Sinne verstanden. So verläuft die Oligomerisierungsreaktion in der Regel exotherm, so dass das Reaktionsgemisch beim Strömen durch das Reaktionssystem, beispielsweise ein Katalysatorbett, eine Temperaturerhöhung erfährt. Unter adiabatischer Reaktionsführung wird eine Vorgehensweise verstanden, bei der die in einer exothermen Reaktion freiwerdende Wärmemenge von der Reaktionsmischung im Reaktor aufgenommen und keine Kühlung durch Kühlvorrichtungen angewandt wird. Somit wird die Reaktionswärme mit dem Reaktionsgemisch aus dem Reaktor abgeführt, abgesehen von einem Restanteil, der durch natürliche Wärmeleitung und Wärmeabstrahlung vom Reaktor an die Umgebung abgegeben wird.

Zur Oligomerisierung in Schritt b) wird ein Übergangsmetall-haltiger Katalysator eingesetzt. Bevorzugt handelt es sich dabei um heterogene Katalysatoren. Bevorzugte Katalysatoren, für die Umsetzung in Schritt a), die bekanntermaßen eine geringe Oligomeren-Verzweigung bewirken, sind dem Fachmann allgemein bekannt. Dazu zählen die in Catalysis Today, 6, 329 (1990), insbesondere Seiten 336-338, sowie die in der DE-A-43 39 713 (= WO-A 95/14647) und der DE-A-199 57 173 beschriebenen Katalysatoren, auf die hiermit ausdrücklich Bezug genommen wird. Ein geeignetes Oligomerisierungsverfahren, bei dem der zur Oligomerisierung eingesetzten Feed-Strom aufgeteilt und mindestens zwei bei unterschiedlichen Temperaturen betriebenen Reaktionszonen zugeführt wird ist in der EP-A-1 457 475 beschrieben, auf die ebenfalls Bezug genommen wird.

Bevorzugt wird ein Oligomerisierungskatalysator eingesetzt, der Nickel enthält. Dabei sind heterogene Katalysatoren bevorzugt, die Nickeloxid enthalten. Die eingesetzten heterogenen Nickel enthaltenden Katalysatoren können unterschiedliche Strukturen aufweisen. Geeignet sind prinzipiell Vollkatalysatoren sowie geträgerte Katalysatoren. Letztere werden bevorzugt eingesetzt. Die Trägermaterialien können z. B. Kieselsäure, Tonerde, Aluminosilicate, Aluminosilicate mit Schichtstrukturen und Zeolithe, wie Mor-denit, Faujasit, Zeolith X, Zeolith-Y und ZSM-5, Zirkoniumoxid, das

mit Säuren behandelt ist, oder sulfatiertes Titandioxid sein. Besonders geeignet sind Fällungskatalysatoren, die durch Mischen wässriger Lösungen von-Nickelsalzen und Silicaten, z. B. Natriumsilicat mit Nickelnitrat, und gegebenenfalls Aluminiumsalzen, wie Aluminiumnitrat, und Calcinieren erhältlich sind. Weiterhin sind Katalysatoren verwendbar, die durch Einlagerung von $Ni^{2+}$-Ionen durch Ionenaustausch in natürliche oder synthetische Schichtsilicate, wie Montmorillonite, erhalten werden. Geeignete Katalysatoren können auch durch Imprägnieren von Kieselsäure, Tonerde oder Alumosilicaten mit wässrigen Lösungen löslicher Nickelsalze, wie Nickelnitrat, Nickelsulfat oder Nickelchlorid, und anschließende Calcinierung erhalten werden.

Nickeloxid enthaltende Katalysatoren sind bevorzugt. Besonders bevorzugt sind Katalysatoren, die im Wesentlichen aus NiO, $SiO_2$, $TiO_2$ und/oder $ZrO_2$ sowie gegebenenfalls $Al_2O_3$ bestehen. Am meisten bevorzugt ist ein Katalysator, der als wesentliche aktive Bestandteile 10 bis 70 Gew.-% Nickeloxid, 5 bis 30 Gew.-% Titandioxid und/oder Zirkondioxid, 0 bis 20 Gew.-% Aluminiumoxid und als Rest Siliciumdioxid enthält. Ein solcher Katalysator ist durch Fällung der Katalysatormasse bei pH 5 bis 9 durch Zugabe einer Nickelnitrat enthaltenden wässrigen Lösung zu einer Alkaliwasserglaslösung, die Titandioxid und/oder Zirkondioxid enthält, Filtrieren, Trocknen und Tempern bei 350 bis 650 °C erhältlich. Zur Herstellung dieser Katalysatoren wird im Einzelnen auf die DE-43 39 713 verwiesen. Auf die Offenbarung dieser Druckschrift und den darin zitierten Stand der Technik wird vollinhaltlich Bezug genommen.

In einer weiteren Ausführungsform wird als Katalysator in Schritt b) ein Nickelkatalysator gemäß der DE-A-199 57 173 eingesetzt. Dabei handelt es sich im Wesentlichen um Aluminiumoxid, das mit einer Nickelverbindung und einer Schwefelverbindung beaufschlagt wurde. Vorzugsweise liegt im fertigen Katalysator ein molares Verhältnis von Schwefel zu Nickel im Bereich von 0,25 : 1 bis 0,38 : 1 vor.

Der Katalysator liegt vorzugsweise in stückiger Form, z. B. in Form von Tabletten, z. B. mit einem Durchmesser von 2 bis 6 mm und einer Höhe von 3 bis 5 mm, Ringen mit z. B. 5 bis 7 mm Außendurchmesser, 2 bis 5 mm Höhe und 2 bis 3 mm Lochdurchmesser, oder Strängen unterschiedlicher Länge eines Durchmessers von z. B. 1,5 bis 5 mm, vor. Derartige Formen werden auf an sich bekannte Weise durch Tablettierung oder Extrusion, meist unter Verwendung eines Tablettierhilfsmittels, wie Graphit oder Stearinsäure, erhalten.

Vorzugsweise wird in Schritt b) ein $C_4$-Kohlenwasserstoffgemisch zur Oligomerisierung eingesetzt und ein Oligomerisierungsprodukt erhalten, das 1 bis 25 Gew.-%, vorzugsweise 2 bis 20 Gew.-%, speziell 3 bis 15 Gew.-% $C_{16}$-Olefine, bezogen auf das Gesamtgewicht des Oligomerisierungsprodukts enthält.

Schritt c) Destillation

Aus dem Reaktionsaustrag der Oligomerisierungsreaktion wird in einem oder mehreren Trennschritten eine $C_{16}$-Olefinfraktion isoliert. Die destillative Auftrennung des in Schritt b) erhaltene Oligomerisierungsprodukt unter Erhalt eines an $C_{16}$-Olefinen angereicherten Olefinstroms kann dabei kontinuierlich oder satzweise (diskontinuierlich) erfolgen.

Geeignete Destillationsvorrichtungen sind die üblichen, dem Fachmann bekannten Apparaturen. Dazu zählen z. B. Destillationskolonnen, wie Bodenkolonnen, die gewünschtenfalls mit Einbauten, Ventilen, Seitenabzügen usw. ausgerüstet sein können, Verdampfer, wie Dünnschichtverdampfer, Fallfilmverdampfer, Wischblattverdampfer, Sambay-Verdampfer usw. und Kombinationen davon. Bevorzugt erfolgt die Isolierung der $C_{16}$-Olefinfraktion durch fraktionierte Destillation.

Die Destillation selbst kann in einer oder in mehreren miteinander gekoppelten Destillationskolonnen erfolgen.

Die eingesetzte Destillationskolonne bzw. die Destillationskolonnen können in einer an sich bekannten Ausführung realisiert werden (siehe z. B. Sattler, Thermische Trennverfahren, 2. Auflage 1995, Weinheim, S. 135ff; Perry's Chemical Engineers Handbook, 7. Auflage 1997, New York, Section 13). Die eingesetzten Destillationskolonnen können trennwirksame Einbauten enthalten, wie Trennböden, z. B. Lochböden, Glockenböden oder Ventilböden, geordnete Packungen, z. B. Blech- oder Gewebepackungen, oder regellose Schüttungen von Füllkörpern. Im Fall der Verwendung von Bodenkolonnen mit Ablaufschächten beträgt die Schachtverweilzeit vorzugsweise wenigstens 5 Sekunden, besonders bevorzugt wenigstens 7 Sekunden. Die konkreten Auslegungs- und Betriebsdaten, wie die in der/den eingesetzten Kolonne(n) notwendige Stufenzahl und das Rücklaufverhältnis kann der Fachmann nach bekannten Methoden ermitteln.

In einer bevorzugten Ausführungsform verwendet man zur Destillation eine Kombination aus zwei Kolonnen. In diesem Falle werden die Olefinoligomere mit weniger als 16 Kohlenstoffatomen (d.h beim Einsatz eines $C_4$-Kohlenwasserstoffgemischs die $C_8$- und $C_{12}$-Oligomere) als Kopfprodukt der ersten Kolonne entnommen. Der an $C_{16}$-Olefinen angereicherten Olefinstroms fällt als Kopfprodukt der zweiten Kolonne an. Olefinoligomere mit mehr als 16 Kohlenstoffatomen (d.h beim Einsatz eines $C_4$-Kohlenwasserstoffgemischs die $C_{20}$-, $C_{24}$- und höhere Oligomere) fallen als Sumpfprodukt der zweiten Kolonne an.

Als Verdampfer und Kondensatoren eignen sich ebenfalls an sich bekannte Apparatetypen. Als Verdampfer kann ein dafür übliches beheizbares Gefäß oder ein Verdampfer mit Zwangsumlauf, beispielsweise ein Fallfilmverdampfer, eingesetzt werden. Werden zur Destillation zwei Destillationskolonnen eingesetzt, so können diese mit gleichen oder unterschiedlichen Verdampfer und Kondensatoren versehen sein.

Vorzugsweise betragen die bei der Destillation auftretenden Sumpftemperaturen höchstens 300 °C, besonders

bevorzugt höchstens 250 °C. Zur Einhaltung dieser Maximaltemperaturen kann die Destillation gewünschtenfalls unter einem geeigneten Vakuum durchgeführt werden.

Vorzugsweise wird in Schritt c) ein an $C_{16}$-Olefinen angereicherter Olefinstrom isoliert, der einen Gehalt an Olefinen mit 16 Kohlenstoffatomen von mindestens 95 Gew.-%, besonders bevorzugt mindestens 98 Gew.-%, insbesondere wenigstens 99 Gew.-%, bezogen auf das Gesamtgewicht des an $C_{16}$-Olefinen angereicherten Olefinstroms, aufweist. Speziell wird in Schritt c) ein an $C_{16}$-Olefinen angereicherter Olefinstrom isoliert, der im Wesentlichen (d.h. zu mehr als 99,5 Gew.-%) aus Olefinen mit 16 Kohlenstoffatomen besteht.

Schritt d) Hydroformylierung

Zur Herstellung eines Alkoholgemischs wird der an $C_{16}$-Olefinen angereicherte Olefinstrom hydroformyliert und anschließend zu $C_{17}$-Alkoholen hydriert. Dabei kann die Herstellung des Alkoholgemischs einstufig oder in zwei separaten Reaktionsschritten erfolgen. Eine Übersicht über Hydroformylierungsverfahren und geeignete Katalysatoren findet sich in Beller et al., Journal of Molecular Catalysis A 104 (1995), S. 17-85.

Es ist für die Synthese des beschriebenen Alkoholgemisches kritisch, dass die Hydroformylierung in Gegenwart eines Cobalt-Hydroformylierungskatalysators erfolgt. Die Menge des Hydroformylierungskatalysators beträgt hierbei im Allgemeinen 0,001 bis 0,5 Gew.-%, gerechnet als Cobaltmetall, bezogen auf die Menge der zu hydroformylierenden Olefine.

Die Reaktionstemperatur liegt im Allgemeinen im Bereich von etwa 100 bis 250 °C, bevorzugt 150 bis 210 °C. Die Reaktion kann bei einem erhöhten Druck von etwa 10 bis 650 bar, vorzugsweise 25 bis 350 bar, durchgeführt werden.

In einer geeigneten Ausführung erfolgt die Hydroformylierung in Gegenwart von Wasser; sie kann allerdings auch in Abwesenheit von Wasser durchgeführt werden.

Kohlenmonoxid und Wasserstoff werden üblicherweise in Form eines Gemisches, dem sogenannten Synthesegas, eingesetzt. Die Zusammensetzung des eingesetzten Synthesegases kann in weiten Bereich variieren. Das molare Verhältnis von Kohlenmonoxid und Wasserstoff beträgt in der Regel etwa 2,5:1 bis 1:2,5. Ein bevorzugtes Verhältnis liegt bei etwa 1:1.

Der hydroformylierungsaktive Cobaltkatalysator ist $HCo(CO)_4$. Der Katalysator kann außerhalb des Hydroformylierungsreaktors, z. B. aus einem Cobalt(II)-salz in Gegenwart von Synthesegas, präformiert und zusammen mit den $C_{16}$-Olefinen und dem Synthesegas in den Hydroformylierungsreaktor eingeführt werden. Alternativ kann die Bildung der katalytisch aktiven Spezies aus Katalysatorvorstufen erst unter den Hydroformylierungsbedingungen, d. h in der Reaktionszone, erfolgen. Geeignete Katalysatorvorstufen sind Cobalt(II)-salze, wie Cobalt(II)-carboxylate, z. B. Cobalt(II)-formiat oder Cobalt(II)-acetat; sowie Cobalt(II)-acetylacetonat oder $Co_2(CO)_8$.

Der homogen im Reaktionsmedium gelöste Cobaltkatalysator kann vom Hydroformylierungsprodukt geeigneterweise abgetrennt werden, indem der Reaktionsaustrag der Hydroformylierung zunächst in Gegenwart einer sauren wässrigen Lösung mit Sauerstoff oder Luft behandelt wird. Dabei wird der Cobaltkatalysator unter Bildung von Cobalt(II)-salzen oxidativ zerstört. Die Cobalt(II)-salze sind wasserlöslich und können durch Extraktion mit Wasser vom Reaktionsaustrag abgetrennt werden. Sie können in der Regel erneut zur Herstellung eines Hydroformylierungskatalysators genutzt und in das Hydroformylierungsverfahren zurückgeführt werden.

Zur kontinuierlichen Durchführung der Hydroformylierung kann man z. B. so vorgehen, dass (i) eine wässrige Cobalt(II)-salzlösung mit Wasserstoff und Kohlenmonoxid unter Bildung eines hydroformylierungsaktiven Cobaltkatalysators innig in Kontakt gebracht wird; (ii) die den Cobaltkatalysator enthaltende wässrige Phase in einer Reaktionszone mit den Olefinen sowie Wasserstoff und Kohlenmonoxid innig in Kontakt gebracht wird, wobei der Cobaltkatalysator in die organische Phase extrahiert wird und die Olefine hydroformyliert werden; und (iii) der Austrag aus der Reaktionszone mit Sauerstoff behandelt wird, wobei der Cobaltkatalysator unter Bildung von Cobalt(II)-salzen zersetzt wird, die Cobalt(II)-salze in die wässrige Phase zurückextrahiert werden und die Phasen getrennt werden. Die wässrige Cobalt(II)-salzlösung wird dann in das Verfahren zurückgeführt. Als geeignete Cobalt(II)-salze kommen vor allem Cobalt(II)-acetat, Cöbalt(II)-formiat und Cobalt(II)-ethylhexanoat in Betracht. Mit Vorteil kann die Bildung des Cobaltkatalysators, die Extraktion des Cobaltkatalysators in die organische Phase und die Hydroformylierung der Olefine in einem Schritt erfolgen, indem die wässrige Cobalt(II)-salzlösung, die Olefine und gegebenenfalls das organische Lösungsmittel sowie Wasserstoff und Kohlenmonoxid in der Reaktionszone unter Hydroformylierungsbedingungen, z. B. mittels einer Mischdüse, innig in Kontakt gebracht werden.

Die bei der Hydroformylierung erhaltenen rohen Aldehyde bzw. Aldehyd/Alkohol-Gemische können vor der Hydrierung gewünschtenfalls nach üblichen, dem Fachmann bekannten Verfahren isoliert und gegebenenfalls gereinigt werden. In der Regel kann das nach Entfernen des Hydroformylierungskatalysators erhaltene Produktgemisch ohne weitere Aufarbeitung in der Hydrierung eingesetzt werden. Hydrierung

Zur Hydrierung werden die bei der Hydroformylierung erhaltenen Reaktionsgemische mit Wasserstoff in Gegenwart eines Hydrierkatalysators umgesetzt.

Geeignete Hydrierkatalysatoren sind im Allgemeinen Übergangsmetalle, wie z. B. Cr, Mo, W, Fe, Rh, Co, Ni,

Pd, Pt, Ru usw. oder deren Mischungen, die zur Erhöhung der Aktivität und Stabilität auf Trägern, wie z. B. Aktivkohle, Aluminiumoxid, Kieselgur usw. aufgebracht werden können. Zur Erhöhung der katalytischen Aktivität können Fe, Co und bevorzugt Ni, auch in Form der Raney-Katalysatoren als Metallschwamm mit einer sehr großen Oberfläche verwendet werden. Bevorzugt wird für die Herstellung der erfindungsgemäßen Tensidalkohole ein Co/Mo-Katalysator eingesetzt. Die Hydrierung der Oxo-Aldehyde erfolgt in Abhängigkeit von der Aktivität des Katalysators vorzugsweise bei erhöhten Temperaturen und erhöhtem Druck. Vorzugsweise liegt die Hydriertemperatur bei etwa 80 bis 250 °C. Bevorzugt liegt der Druck bei etwa 50 bis 350 bar.

Aus dem nach der Hydrierung erhaltenen Reaktionsgemisch kann nach üblichen, dem Fachmann bekannten Reinigungsverfahren, insbesondere durch fraktionierte Destillation aufgearbeitet werden, wobei ein $C_{17}$-Alkoholgemisch mit dem eingangs geschilderten Verzweigungsgrad rein gewonnen wird.

Das nach dem beschriebenen Verfahren erhaltene $C_{17}$-Alkoholgemisch weist vorzugsweise einen Gehalt an Alkoholen mit 17 Kohlenstoffatomen von mindestens 95 Gew.-%, besonders bevorzugt mindestens 98 Gew.-%, insbesondere wenigstens 99 Gew.-%, bezogen auf das Gesamtgewicht des $C_{17}$-Alkoholgemischs, auf. Speziell handelt es sich um ein $C_{17}$-Alkoholgemisch, das im Wesentlichen (d.h. zu mehr als 99,5 Gew.-%, speziell zu mehr als 99,9 Gew.-%) aus Alkoholen mit 17 Kohlenstoffatomen besteht.

Tenside $R^1$-X

Bei den hydrophilen Gruppen X des Tensids $R^1$-X kann sich um anionische, nichtionische, kationische oder betainische Gruppen handeln. Bevorzugt handelt es sich um anionische oder nichtionische Gruppen. Beispiele bevorzugter Gruppen X umfassen Sulfonatgruppen, Polyoxyalkylengruppen, anionisch modifizierte Polyoxyalkylengruppen, Glucosidgruppen oder Aminoxidgruppen. Besonders bevorzugt sind Tenside mit Polyoxyalkylengruppen sowie anionisch modifizierten Polyoxyalkylengruppen. Anionisch modifizierte Polyoxyalkylengruppen weisen bevorzugt terminale Sulfonat-, terminale Carboxylat- oder terminale Sulfatgruppen auf. Die Polyoxyalkylengruppen können 1 bis 50 Oxyalkylengruppen, bevorzugt 1 bis 40 umfassen, bevorzugt Ethoxygruppen und/oder Propoxygruppen. Daneben können aber auch noch höhere Alkylenoxygruppen vorhanden sein. Bevorzugt handelt es sich bei mindestens 50 % der vorhandenen Oxyalkylengruppen um Ethoxygruppen. Derartige Tenside $R^1$-X können ausgehend von den Alkoholen $R^1$-OH nach dem Fachmann prinzipiell bekannten Methoden hergestellt werden. Bei der Gruppe X kann es sich auch um OH handeln, d.h. der Alkohol $R^1$-OH selbst soll auch als Tensid im Sinne dieser Erfindung betrachtet werden.

Beschreibung bevorzugter Tenside $R^1$-X

Zur Anwendung in der tertiären Erdölförderung bevorzugte Tenside $R^1$-X werden nachfolgend beschrieben.

In einer bevorzugten Ausführungsform der Erfindung handelt es sich bei den erfindungsgemäßen Tensiden um solche ausgewählt aus der Gruppe von Alkylalkoxylaten (A), Alkylethersulfonaten (B), Alkylethercarboxylaten (C), Alkylethersulfaten (D), Alkyl-polyglukosiden (E) und/oder Alkylaminoxiden (F).

Alkylalkoxylate (A)

Die Alkylalkoxylate (A) haben die allgemeine Formel (I)

$$R^1O\text{-}(CH_2CH(R^2)O)_n(CH_2CH_2O)_m\text{-}H \qquad (I).$$

Die Alkylalkoxylate (A) umfassen n Alkoxygruppen der allgemeinen Formel-$CH_2CH(R^2)O$- sowie m Ethoxygruppen -$CH_2CH_2O$-. Die Formel der Alkoxygruppe soll dabei auch Einheiten der Formel -$CH(R^2)CH_2O$- mit einschließen, also in inverser Orientierung in das Tensid eingebaute Alkoxygruppen, wobei in einem Tensidmolekül selbstverständlich auch beide Anordnungen vertreten sein können. Bei $R^2$ handelt um geradkettige, verzweigte, aliphatische oder aromatische Kohlenwasserstoffreste mit 1 bis 10 Kohlenstoffatomen, wobei ein Tensidmolekül auch mehrere verschiedene Reste $R^2$ aufweisen kann. Bevorzugt handelt es sich bei $R^2$ um eine Methyl-, Ethyl-, n-Propyl-und/oder Phenylgruppe, und besonders bevorzugt um eine Methylgruppe, d.h. bei der Alkoxygruppe handelt es sich um eine Propoxygruppe.

Die Zahlen n und m beziehen sich dabei in bekannter Art und Weise auf den Mittelwert der im Tensid vorhandenen Alkoxy- bzw. Ethoxygruppen, wobei der Mittelwert selbstverständlich nicht eine natürliche Zahl sein muss, sondern auch eine beliebige rationale Zahl sein kann. Die Zahl n steht hierbei für Werte von 0 bis 15, bevorzugt 0 bis 7 und besonders bevorzugt 0 bis 5, und m steht für Werte von 1 bis 20, bevorzugt 2 bis 15 und besonders bevorzugt 5 bis 14. Die Summe k= n + m steht hierbei für einen Wert von 1 bis 35, bevorzugt 2 bis 20 und besonders bevorzugt 5 bis 15. Weiterhin bevorzugt ist m > n, d.h. in der bevorzugten Variante ist die Zahl der Ethoxygruppen größer als die der Alkoxygruppen.

Die Anordnung der Alkoxygruppen und Ethoxygruppen im Tensid (I) -sofern beide Arten von Gruppen vorhanden

sind- kann statistisch oder alternierend sein, oder es kann eine Blockstruktur vorliegen. Bevorzugt handelt es sich um eine Blockstruktur bei der die Alkoxy- und Ethoxygruppen tatsächlich in der Reihenfolge $R^1O$ - Alkoxyblock - Ethoxyblock-H angeordnet sind.

Die Alkylalkoxylate (A) können in prinzipiell bekannter Art und Weise durch Alkoxylierung des Alkohols $R^1$-OH hergestellt werden. Die Durchführung von Alkoxylierungen ist dem Fachmann prinzipiell bekannt. Es ist dem Fachmann ebenfalls bekannt, dass man durch die Reaktionsbedingungen, insbesondere die Wahl des Katalysators, die Molekulargewichtsverteilung der Alkoxylate beeinflussen kann.

Die Alkylalkoxylate (A) können beispielsweise durch basenkatalysierte Alkoxylierung hergestellt werden. Dazu kann der Alkohol $R^1$-OH in einem Druckreaktor mit Alkalimetallhydroxiden, bevorzugt Kaliumhydroxid oder mit Alkalialkoholaten wie beispielsweise Natriummethylat versetzt werden. Durch verminderten Druck (bspw. <100 mbar) und/oder Erhöhung der Temperatur (30 bis 150°C) kann noch in der Mischung vorhandenes Wasser abgezogen werden. Der Alkohol liegt danach als das entsprechende Alkoholat vor. Anschließend wird mit Inertgas (z.B. Stickstoff) inertisiert und das oder die Alkylenoxid(e) bei Temperaturen von 60 bis 180°C bis zu einem Druck von max. 10 bar schrittweise zugegeben. Am Ende der Reaktion kann der Katalysator durch Zugabe von Säure (z.B. Essigsäure oder Phosphorsäure) neutralisiert und kann bei Bedarf abfiltriert werden. Mittels KOH-Katalyse hergestellte Alkylalkoxylate weisen in der Regel eine relativ breite Molkulargewichtsverteilung auf.

In einer bevorzugten Ausführungsform der Erfindung werden die Alkylalkoxylate (A) mittels dem Fachmann bekannten Techniken synthetisiert, welche zu engeren Molekulargewichtsverteilungen führen als bei der basenkatalysierten Synthese. Hierzu können als Katalysator beispielsweise Doppelhydroxidtone wie in DE 43 25 237 A1 beschrieben eingesetzt werden. Die Alkoxylierung Kann besonders bevorzugt unter Verwendung von Doppelmetallcyanid-Katalysatoren (DMC-Katalysatoren) erfolgen. Geeignete DMC-Katalysatoren sind beispielsweise in der DE 102 43 361 A1, insbesondere den Abschnitten [0029] bis [0041] sowie der darin zitierten Literatur offenbart. Beispielsweise können Katalysatoren vom Zn-Co-Typ eingesetzt werden. Zur Durchführung der Reaktion kann Alkohol $R^1$-OH wird mit dem Katalysator versetzt, die Mischung wie oben beschrieben entwässert und mit den Alkylenoxiden wie beschrieben umgesetzt werden. Üblicherweise werden nicht mehr als 250 ppm Katalysator bzgl. der Mischung eingesetzt, und der Katalysator kann aufgrund dieser geringen Menge im Produkt verbleiben. Mittels DMC-Katalyse hergestellte erfindungsgemäße Tenside zeichnen sich dadurch aus, dass sie eine bessere Erniedrigung der Grenzflächenspannung im System Wasser-Erdöl zur Folge haben, als mittel KOH-Katalyse hergestellte Produkte.

Alkylalkoxylate (A) können weiterhin auch durch säurekatalysierte Alkoxylierung hergestellt werden. Bei den Säuren kann es sich um Brönstedt- oder Lewissäuren handeln.

Zur Durchführung der Reaktion kann Alkohol $R^1$-OH wird mit dem Katalysator versetzt, die Mischung wie oben beschrieben entwässert werden und mit den Alkylenoxiden wie beschrieben umgesetzt werden. Am Ende der Reaktion kann der Katalysator durch Zugabe einer Base, beispielsweise KOH oder NaOH neutralisiert und bei Bedarf abfiltriert werden. Mit der Wahl des Katalysators kann die Struktur der hydrophilen Gruppe X beeinflusst werden. Während bei basischer Katalyse die Alkoxyeinheiten überwiegend in der in Formel (Ia) wiedergegebenen Orientierung in das Alkyaloxylat eingebaut werden, werden bei saurer Katalyse die Einheiten zu größeren Teilen in der Orientierung (Ib) eingebaut.

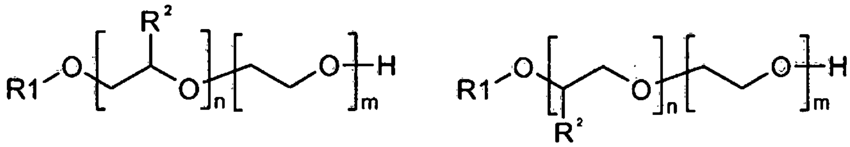

(Ia) (Ib)

Alkylethersulfonate (B)

Die Alkylethersulfonate (B) leiten sich von den Alkylalkoxylaten (A) ab und weisen zusätzlich eine terminale Sulfonatgruppe auf. Die Alkylethersulfonate (B) haben die allgemeine Formel (II)

$$R^1O\text{-}(CH_2CH(R^2)O)_{n'}(CH_2CH_2O)_{m'}\text{-}R^3\text{-}SO_3M \qquad (II),$$

wobei $R^2$ die oben definierte Bedeutung hat. In Formel (II) steht M für $H^+$ oder ein k-wertiges Gegenion $1/xY^{x+}$. x steht hierbei für die Ladung des Gegenions. Bevorzugt handelt es sich um ein einwertiges Gegenion, wie $NH_4^+$-, Ammoniumionen mit organischen Resten oder Alkalimetallionen. Bevorzugt steht Y für $Li^+$, $Na^+$ und $K^+$, und besonders bevorzugt ist $Na^+$. Das Alkylethersulfonat kann also als freie Säure vorliegen oder als ein Salz davon.

Die Zahl n' steht hierbei für Werte von 0 bis 15, bevorzugt 1 bis 10 und m' steht für Werte von 1 bis 20, bevorzugt 2 bis 15 und besonders bevorzugt 5 bis 14. Die Summe k'= n' + m' steht hierbei für einen Wert von 1 bis 35, bevorzugt

1 bis 20 und besonders bevorzugt 1 bis 15. Weiterhin bevorzugt ist m' > n', d.h. die Zahl der Ethoxygruppen ist größer als die er Alkoxygruppen.

Wie oben definiert, kann die Anordnung der Alkoxy- und Ethoxygruppen statistisch oder alternierend sein, oder es kann eine Blockstruktur vorliegen. Bevorzugt handelt es sich um eine Blockstruktur bei der die Alkoxy- und Propoxygruppen tatsächlich in der Reihenfolge $R^1O$ - Alkoxyblock - Ethoxyblock-$R^3$-$SO_3M$ angeordnet sind.

Bei der Gruppe $R^3$, welche die Alkoxygruppe mit der Sulfonatgruppe verknüpft, handelt es sich um eine zweiwertige Kohlenwasserstoffgruppe mit 2 bis 12 Kohlenstoffatomen, bevorzugt 2 bis 4 Kohlenstoffatomen, welche optional funktionelle Gruppen als Substituenten aufweisen kann. Bevorzugt handelt es sich um eine Gruppe, ausgewählt aus der Gruppe von 1,2-Ethylengruppen $-CH_2-CH_2-$, 1,2-Propylengruppen $-CH_2-CHR^2$-bzw. $-CH(R^2)-CH_2-$ oder 1,3-Propylengruppen $-CH_2-CH(R^4)-CH_2-$, wobei $R^2$ die eingangs definierte Bedeutung hat und $R^4$ für H oder OH steht.

Die erfindungsgemäßen Alkylethersulfonate (B) können unter Verwendung der Alkylalkoxylate (A) als Ausgangsmaterial hergestellt werden. Die Überführung in das Sulfonat kann beispielsweise durch Substitution der OH-Gruppe des Alkoxylates gegen Cl unter Verwendung von Phosgen oder Thionylchlorid erfolgen. Die Umsetzung kann in Gegenwart eines Lösungsmittels wie z.B. Chlorbenzol vorgenommen werden. Dabei frei werdende HCl sowie freiwerdendes $CO_2$ oder $SO_2$ kann vorteilhaft durch Strippen mit Stickstoff aus dem System entfernt, so dass eine Etherspaltung unterbunden wird. Die Alkylalkoxychlor-Verbindung wird im Anschluss daran mit einer wässrigen Lösung von Natriumsulfit umgesetzt, wobei das Chlorid durch Sulfit substituiert wird und das Alkylethersulfonat erhalten wird. Die Substitution kann in Gegenwart eines Phasenvermittlers (bspw. $C_1$- bis $C_8$-Alkohole) bei einer Temperatur 100 - 180°C und Druck vorgenommen werden. Je nachdem, ob im Alkylalkoxylat (A) eine Ethoxygruppe oder eine Alkoxygruppe als terminale Gruppe vorhanden ist, weist das Alkylethersulfonate (B) als terminale Gruppe $-R^3-SO_3M$ eine $-CH_2CH_2-SO_3M$ oder $-CH(R^2)-CH_2-SO_3M$ bzw. $-CH_2-CH(R^2)-SO_3M$ -Gruppe auf. Bei dieser Synthesevariante gilt k'=k-1. Eine Alternative zur Chlorierung stellt die Sulfatierung der Alkylalkoxylate (A) mit $SO_3$ in einem Fallfilmreaktor und nachfolgender Neutralisation mit NaOH dar. Das gebildete Alkylethersulfat mittels nucleophiler Substitution der Sulfatgruppe durch Natriumsulfit analog der obigen Beschreibung in das Alkylethersulfonat (B) übergeführt werden.

Die Alkylethersulfonate (B) können alternativ durch Addition von Vinylsulfonsäure an das Alkylalkoxylat (A) erhalten werden. Einzelheiten hierzu sind beispielsweise in EP 311 961 A1 beschrieben. In diesem Falle wird ein Alkylethersulfonat (B) mit einer terminale Gruppe-$CH_2CH_2-SO_3M$ erhalten, wobei k'=k gilt.

Alkylethersulfonate (B) mit einer terminalen Gruppe $-CH_2-CH_2-CH_2-SO_3M$ (d.h. $R^4$ = H) können erhalten werden, indem man das Alkylalkoxylat mit 1,3-Propansulton umsetzt. Alkylethersulfinate (B) mit einer terminalen Gruppe $-CH_2-CH(OH)-CH_2-SO_3M$ sind durch die Umsetzung des entsprechenden Alkylalkoxylates (A) mit Epichlorhydrin und nachfolgender nucleophiler Substitution der Chloridgruppe durch Natriumsulfit zugänglich. In beiden Fällen gilt k'=k.

<u>Alkylethercarboxylate (C)</u>

Die Alkylethercarboxylate (C) leiten sich von den Alkylalkoxylaten (A) ab und weisen zusätzlich eine terminale Carboxylatgruppe auf. Bevorzugte Alkylethercarboxylate (C) haben die allgemeine Formel (III)

$$R^1O-(CH_2CH(R^2)O)_{n''}(CH_2CH_2O)_{m''}-R^5-COOM \qquad (III),$$

wobei $R^2$ und M die oben definierte Bedeutung haben.

Die Zahl n" steht hierbei für Werte von 0 bis 15, bevorzugt 1 bis 10 und m" steht für Werte von 1 bis 20, bevorzugt 2 bis 15 und besonders bevorzugt 5 bis14. Die Summe k"= n" + m" steht hierbei für einen Wert von 1 bis 35, bevorzugt 1 bis 20 und besonders bevorzugt 1 bis 15. Weiterhin bevorzugt ist m" > n", d.h. die Zahl der Ethoxygruppen ist größer als die er Alkoxygruppen.

Das Alkylethercarboxylat (C) kann also als freie Säure vorliegen oder als ein Salz davon. Wie oben definiert, kann die Anordnung der Alkoxy- und Ethoxygruppen statistisch oder alternierend sein, oder es kann eine Blockstruktur vorliegen. Bevorzugt handelt es sich um eine Blockstruktur bei der die Alkoxy- und Propoxygruppen tatsächlich in der Reihenfolge $R^1O$ - Alkoxyblock - Ethoxyblock-$R^5$-COOM angeordnet sind.

Bei der Gruppe $R^5$, welche die Alkoxygruppe mit der Carboxylatgruppe verknüpft, handelt es sich um handelt es sich um eine zweiwertige Kohlenwasserstoffgruppe mit 1 bis 12 Kohlenstoffatomen, bevorzugt 1 bis 3 Kohlenstoffatomen. Bevorzugt handelt es sich um eine Methylengruppe $-CH_2-$, eine 1,2-Ethylengruppe $-CH_2-CH_2-$ oder eine 1,2-Propylengruppe $-CH_2-CH(CH_3)-$.

Die erfindungsgemäßen Alkylethercarboxylate (C) können unter Verwendung der Alkylalkoxylate (A) als Ausgangsmaterial hergestellt werden. Diese können durch Oxidation des Alkoxylates zu den entsprechenden Alkylethercarboxylaten (C) umgesetzt werden. Hierzu sind prinzipiell alle Oxidationsmittel geeignet, ggf. in Verbindung mit geeigneten Katalysatoren, welche die terminale OH-Gruppe des Alkylaloxylates (A) zur COOH-Gruppe oxidieren können, ohne in großem Maße andere Teile des Moleküls zu oxidieren. Die Oxidation kann beispielsweise mit Hilfe von Luft oder Sauerstoff unter Verwendung eines Edelmetallkatalysators (beispielsweise eines Katalysators auf Basis von Palladium) vorgenommen werden. Bei dieser Synthesevariante wird eine terminale Gruppe $-CH_2-COOM$ erhalten und es gilt k' = k -1.

In einer weiteren Ausführungsform der Erfindung können die erfindungsgemäßen Alkylethercarboxylate (C) auch hergestellt werden, indem man an ein Alkylalkoxylat (A) mittels einer Michael-Addition (Meth)acrylsäure oder einen (Meth)acrylsäureester addiert. Falls die Ester verwendet werden, werden diese nach der Addition verseift. Bei dieser Synthesevarianten werden -je nachdem, ob Acrylsäure oder (Meth)acrylsäure bzw. deren Ester verwendet wurden-terminale Gruppen $-CH_2-CH_2-COOM$ oder $-CH_2-CH(CH_3)-COOM$ erhalten und es gilt k" = k.

Alkylethersulfate (D)

Die Alkylethersulfate (D) leiten sich von den Alkylalkoxylaten (A) ab und weisen zusätzlich eine terminale Sulfatgruppe auf. Die Alkylethersulfate (D) haben die allgemeine Formel (IV)

$$R^1O-(CH_2CH(R^2)O)_{n'''}(CH_2CH_2O)_{m'''}-SO_3M \qquad (IV),$$

wobei $R^2$ die oben definierte Bedeutung hat. In Formel (IV) steht M für $H^+$ oder ein k-wertiges Gegenion $1/xY^{x+}$. x steht hierbei für die Ladung des Gegenions. Bevorzugt handelt es sich um ein einwertiges Gegenion, wie $NH_4^+$-, Ammoniumionen mit organischen Resten oder Alkalimetallionen. Bevorzugt steht Y für $Li^+$, $Na^+$ und $K^+$, und besonders bevorzugt ist $Na^+$. Das Alkylethersulfat kann also als freie Säure vorliegen oder als ein Salz davon.

Die Zahl n'" steht hierbei für Werte von 0 bis 15, bevorzugt 1 bis 10 und m'" steht für Werte von 1 bis 20, bevorzugt 2 bis 15 und besonders bevorzugt 5 bis 14. Die Summe k"'= n'" + m'" steht hierbei für einen Wert von 1 bis 35, bevorzugt 1 bis 20 und besonders bevorzugt 1 bis 15. Weiterhin bevorzugt ist m"' > n"', d.h. die Zahl der Ethoxygruppen ist größer als die er Alkoxygruppen.

Wie oben definiert, kann die Anordnung der Alkoxy- und Ethoxygruppen statistisch oder alternierend sein, oder es kann eine Blockstruktur vorliegen. Bevorzugt handelt es sich um eine Blockstruktur bei der die Alkoxy- und Propoxygruppen tatsächlich in der Reihenfolge $R^1O$ - Alkoxyblock - Ethoxyblock-$SO_3M$ angeordnet sind.

Die erfindungsgemäßen Alkylethersulfate (D) können unter Verwendung der Alkylalkoxylate (A) als Ausgangsmaterial hergestellt werden. Die Überführung in das Sulfat kann beispielsweise durch Addition der OH-Gruppe des Alkoxylates an Schwefeltrioxid erfolgen und nachfolgender Neutralisation mit z.B. Natronlauge. Dies kann z.B. in einem Fallfilmreaktor durchgeführt werden.

Alkylpolyglucoside (E)

Die Alkylpolyglucoside (E) weisen als terminale Gruppe eine Polyglucosidgruppe auf. Bevorzugte Alkylpolyglucoside (E) haben die nachfolgende Formel (V)

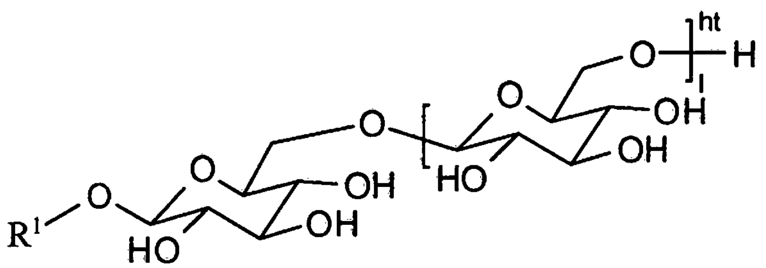

(V)

Hierbei steht l für eine Zahl von 0 bis 2, wobei es sich bei l um den Mittelwert der Verteilung handelt. Die Alkylpolyglucoside (E) können in prinzipiell bekannter Art und weise hergestellt werden, indem man Glucose mit Hilfe eines sauren Katalysators, wie beispielsweise para-Toluolsulfonsäure und n-Butanol in das entsprechende Butylacetal überführt. Das entstehende Reaktionswasser kann durch Anlegen von Vakuum aus dem Reaktionsgemisch entfernt werden. Im Anschluss wird der Alkohol $R^1$-OH zugegeben und die Umacetalisierung durch destillative Entfernung des Butanols aus dem Gleichgewicht vorangetrieben. Der saure Katalysator kann am Ende der Reaktion durch Zugabe von Base, beispielsweise NaOH oder KOH neutralisiert werden.

Alkylaminoxide (F)

Die Alkylaminoxide (F) weisen die allgemeine Formel (VI) auf

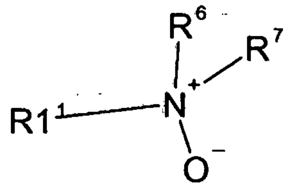

(VI)

Bei $R^6$ bzw. $R^7$ handelt es sich unabhängig voneinander um Methyl- oder um Hydroxyethylreste. Die Aminoxide (F) können in prinzipiell bekannter Art und Weise hergestellt werden, indem man den Alkohol $R^1$-OH oder seine Vorstufe, den Aldyhyd, in einer katalytischen reduktiven Aminierung mit N,N-Dimethylamin oder Diethanolamin und Wasserstoff in das entsprechende tertiäre Amin überführt. Das Aminoxid kann hieraus anschließend durch Zugabe von Wasserstoffperoxid erhalten werden.

<u>Verwendung zur tertiären Erdölförderung</u>

Die erfindungsgemäßen Tenside $R^1$-X können bevorzugt zur tertiären Erdölförderung (EOR) verwendet werden. Sie bewirken durch eine starke Herabsetzung der Grenzflächenspannung zwischen Öl und Wasser eine besonders gute Mobilisierung des Rohöls in der Erdölformation.

Sie werden hierzu in Form einer geeigneten Formulierung durch mindestens eine Injektionsbohrung in die Erdöllagerstätte eingepresst, und der Lagerstätte wird durch mindestens eine Produktionsbohrung Rohöl entnommen. Mit dem Begriff "Rohöl" ist in diesem Zusammenhang selbstverständlich nicht nur phasenreines Öl gemeint, sondern der Begriff schließt die üblichen Rohöl-Wasser-Emulsionen mit ein. In der Regel wird eine Lagerstätte mit mehreren Injektionsbohrungen und mit mehreren Produktionsbohrungen versehen. Im Anschluss an das Einpressen der Tensidformulierung, dem sogenannten "Tensidfluten" kann zur Aufrechterhaltung des Drucks Wasser in die Formation injiziert werden ("Wasserfluten"), oder bevorzugt eine höherviskose, wässrige Lösung eines stark verdickend wirkenden Polymers ("Polymerfluten"). Es sind aber auch Techniken bekannt, nach dem man die Tenside zunächst einmal auf die Formation einwirken lässt. Dem Fachmann sind Einzelheiten zur technischen Durchführung des "Tensidflutens", "Wasserflutens" und "Polymerflutens" bekannt, und er wendet je nach Art der Lagerstätte eine entsprechende Technik an.

Die erfindungsgemäßen Tenside werden hierbei bevorzugt in wässriger Formulierung eingesetzt. Neben Wasser können die Formulierungen als Lösemittel optional nicht mehr als 50 Gew. %, bevorzugt nicht mehr als 20 Gew. % mit Wasser mischbare Alkohole enthalten.

Zur tertiären Erdölförderung kann jeweils nur ein einziges der erfindungsgemäßen Tenside $R^1$-X eingesetzt werden. Bevorzugt wird aber eine Formulierung eingesetzt, welche mindestens zwei unterschiedliche Tenside umfasst, wobei es sich bei mindestens einem davon um ein Tensid $R^1$-X handelt.

Das Tensid $R^1$-X kann hierbei als Tensid oder auch als Cotensid eingesetzt werden. Unter "Cotensid", auch als "Sekundärtensid" bezeichnet, wird in prinzipiell bekannter Art und Weise ein Tensid verstanden, welches in geringer Menge anderen Tensiden oder Tensidmischungen zugesetzt wird, um deren Eigenschaftsprofil durch synergistische Wirkung zu verbessern. Die Menge aller Tenside $R^1$-X zusammen bezüglich der Gesamtmenge aller in einer Tensidmischung eingesetzten Tenside wird vom Fachmann je nach der Art der gewünschten Eigenschaften bestimmt. Die Menge an Tensiden $R^1$-X beträgt im Regelfalle 1 bis 99 Gew. % bezüglich der Gesamtmenge aller Tenside in der Mischung. Bevorzugt beträgt die Menge 10 bis 95 Gew. %.

Beispiele weiterer Tenside, welche neben den Tensiden $R^1$-X eingesetzt werden können, umfassen anionische Tenside, insbesondere um organische Sulfonate, wie beispielsweise Olefinsulfonate oder Alkylarylsulfonate, nichtionische Tenside oder anionische Tenside, welche durch anionische Modifikation von nichtionischen Tensiden hergestellt werden, wie beispielsweise Ethersulfate, Ethersulfonate oder Ethercarboxylate oder Alkylpolyole und/oder Alkylpolyglucoside. Weiterhin können auch Aminoxide, Tenside mit Ammoniumgruppen oder Betaine eingesetzt werden.

Neben den Tensiden können die Formulierungen auch noch weitere Komponenten enthalten wie beispielsweise $C_1$- bis $C_8$-Alkohole und/oder basische Salze (so genantes "alkali surfactant flooding") aufweisen. Mit derartigen Zusätzen kann beispielsweise die Retention in der Formation reduziert werden.

Zur tertiären Erdölförderung bevorzugte Mischungen, welche Tenside $R^1$-X umfassen, sind nachfolgend beschrieben.

In einer bevorzugten Ausführungsform der Erfindung kann zur tertiären Erdölförderung eine Mischung (M) aus mindestens einem nichtionischen Tensid (M1) und mindestens einem anionischen Tensid (M2) eingesetzt werden, wobei es sich bei mindestens einem der beiden Tenside um ein Tensid $R^1$-X handelt. Bei dem anionischen Tensid (M2) handelt es sich besonders bevorzugt um ein anionisch modifiziertes, nichtionisches Tensid, insbesondere ein mit Sulfonatgruppen und/oder Carboxylatgruppen und/ oder Sulfatgruppen modifiziertes Tensid. Derartige Mischungen sind besonders geeignet zum Einsatz in hochsalinen Lagerstätten. Zum Einsatz können die Mischungen wie oben beschrieben bevorzugt

mit geeigneten Lösemitteln bzw. Mischungen von Lösungsmitteln formuliert werden.

Weiterhin bevorzugt sind Mischungen aus mindestens einem sich nichtionisch verhaltendem Tensid (M1') sowie mindestens einem sich ionisch verhaltendem Tensid (M2'). Hierunter sind jeweils Tenside zu verstehen, bei denen die Gruppe X sowohl ionische wie nichtionische Baueinheiten umfasst, und bei denen je nach Art und/oder Einsatzbedingungen nichtionisches Verhalten oder ionisches Verhalten dominiert. Beispiele derartiger Tenside umfassen die oben genannten Alkylethersulfonate, Alkylethercarboxylate und Alkylethersulfate. Ein typisches nichtionisches Tensid mit Polyethereinheiten verhält sich in einem Öl-Wasser-Tensid-System mit zunehmender Temperatur hydrophober. Derartige Tenside bilden bei tieferen Temperaturen zunächst eine Öl-in-Wasser-Emulsion, also eine Emulsion von Öl in einer kontinuierlichen Wasserphase. Bei Zunahme der Temperatur erfolgt schließlich ein Phasenübergang zu einer Wasserin-Öl-Emulsion, also einer Emulsion von Wasser in einer kontinuierlichen Ölphase. Dieser Übergang kann beispielsweise durch eine Leitfähigkeitsmessung verfolgt werden. Der Übergang von einer kontinuierlichen Wasserphase in eine diskontinuierliche Wasserphase ist mit einem deutlichen Abfall der Leitfähigkeit verbunden. Sich ionisch verhaltende Tenside verhalten sich umgekehrt und werden mit zunehmender Temperatur hydrophiler. Eine Wasser-in-Öl-Emulsion wandelt sich also mit zunehmender Temperatur in eine Öl-in-Wasser-Emulsion um, was ebenfalls durch eine Leitfähigkeitsmessung gut zu verfolgen ist.

Bevorzugt handelt es sich um eine Mischung (M), welche als Komponenten mindestens ein Alkylalkoxylat (A) und/oder ein Alkylethersulfonat (B) und/oder Alkylethersulfat (D) umfasst. Weiterhin bevorzugt ist eine Mischung, welche ein Alkylethersulfonat (B) im Gemisch mit einem Alkylethercarboxylat (C), insbesondere ein Gemisch aus einem Alkylalkoxylat (A), einem Alkylethersulfonat (B) und einem Alkylethercarboxylat (C).

Als Mischungskomponente neben den erfindungsgemäßen Tensiden sind besonders Tenside der allgemeinen Formel $R^8$-X geeignet, wobei es sich bei $R^8$ um einen aliphatischen oder araliphatischen $C_{16}$- bis $C_{20}$-Kohlenwasserstoffrest, bevorzugt einen $C_{16}$-bis $C_{18}$-Kohlenwasserstoffrest handelt. Ein bevorzugter Rest sollte einen Verzweigungsgrad von weniger als 2 aufweisen, bevorzugt weniger als 1 und besonders bevorzugt linear sein. Bei den Kohlenwasserstoffresten kann es sich beispielsweise um 4-Dodecylphenylreste handeln, oder um Hexadecyl-, Heptadecyl- oder Octadeccylreste. Bei dem Rest X handelt es sich um eine hydrophile Gruppe wie oben definiert, bevorzugt um einen Rest X ausgewählt aus der Gruppe von Sulfonatgruppen, Polyoxyalkylengruppen, anionisch modifizierten Polyoxyalkylengruppen, Glucosidgruppen oder Aminoxidgruppen.

Besonders bevorzugt kann es sich bei den Tensiden $R^8$-X um Alkylalkoylate der allgemeinen Formel

$$R^8\text{-}(CH_2CH(R^2)O)_n(CH_2CH_2O)_m\text{-}H \qquad \text{(VII)}$$

handeln, wobei die Indices die obige Bedeutung haben. Weiterhin bevorzugt kann es sich um Alkylethersulfonate der allgemeinen Formel

$$R^8O\text{-}(CH_2CH(R^2)O)_n\text{-}(CH_2CH_2O)_m\text{-}R^3\text{-}SO_3M \qquad \text{(VIII)}$$

handeln, wobei die Indices ebenfalls die obige Bedeutung haben. Mischungen der Tenside $R^1$-X und $R^8$-X lassen sich besonders einfach herstellen, indem man zur Alkoxylierung von einem Gemisch der Alkohole $R^1$-OH und $R^8$-OH ausgeht und die Mischung dieser Alkohole wie oben beschrieben einsetzt.

In einer weiteren bevorzugten Ausführungsform umfasst die Mischung (M) neben den Komponenten (M1) und (M2) noch ein polymeres Cotensid (M3). Die Menge des Co-Tensids (M3) beträgt nicht mehr als 49,9 Gew. % bezüglich der Gesamtmenge aller eingesetzten Tenside (M1), (M2) und (M3). Bevorzugt beträgt die Menge 1 bis 10 Gew. %. Mit derartigen polymeren Cotensiden lässt sich vorteilhaft die zur Bildung einer Mikroemulsion notwendige Menge an Tensid reduzieren. Derartige polymere Cotenside werden daher auch als "Mikroemulsionsbooster" bezeichnet.

Bei den polymeren Cotensiden (M3) handelt es sich um amphiphile Blockcopolymere, welche mindestens einen hydrophilen und mindestens einen hydrophoben Blocke umfassen. Sie weisen bevorzugt molekulare Massen $M_n$ von 1000 bis 50000 g/mol auf. Die hydrophilen und die hydrophoben Blöcke sollten im dabei im Regelfalle zumindest eine molare Masse von jeweils 500 g/mol, bevorzugt 750 g/mol und besonders bevorzugt 1000 g/mol aufweisen. Die hydrophoben und hydrophilen Blöcke können hierbei auf verschiedene Art und Weise miteinander verknüpft werden. Es kann sich beispielsweise um Zweiblockcopolymere handeln oder um Mehrblockcopolymere, bei denen die hydrophoben und hydrophilen Blöcke alternierend angeordnet sind. Die polymere können linear, verzweigt oder sternförmig sein, oder es kann sich auch um ein Kammpolymere handeln, welches eine Hauptkette sowie eine oder mehrere damit verknüpfte Seitenketten aufweist.

Bevorzugt sind Blockcopolymere, welche als hydrophile Blöcken Polyethylenoxidblöcke oder statistische Polyethylenoxid-Polypropylenoxidblöcke aufweisen, wobei der Propylenoxidanteil 40 mol %, bevorzugt 20 mol % und besonders bevorzugt 10 mol % bezüglich der Summe der in den Block einpolymerisierten Ethylenoxid- und Propylenoxideinheiten nicht übersteigen sollte. Bevorzugt handelt es sich um reine Polyethylenoxidblöcke. Bei den hydrophoben Blöcken kann es sich beispielsweise um Blöcke aus Polypropylenoxid oder $C_4$- bis $C_{12}$-Alkylenoxiden handeln. Weiterhin

können hydrophobe Blöcke beispielsweise aus Kohlenwasserstoffeinheiten oder (Meth)acrylsäureestern aufgebaut werden.

Bevorzugte polymere Cotenside (M3) umfassen Polypropylenoxid-Polyethylenoxid-Blockcopolymere, Polyisobuten-Polyethylenöxid-Blockcopolymere sowie Kammpolymere mit Polyethylenoxid-Seitenketten und einer hydrophoben Hauptkette umfasst, wobei die Hauptkette bevorzugt im Wesentlichen Olefine oder (Meth)acrylate als Baueinheiten umfasst. Der Begriff "Polyethylenoxid" soll hierbei jeweils Propylenoxideinheiten umfassende Polyethylenoxidblöcke gemäß obiger Definition einschließen. Nähere Einzelheiten zu den bevorzugten polymeren Cotensiden (M3) sind in WO 2006/131541 offenbart.

Die nachfolgenden Beispiele sollen die Erfindung näher erläutern:

I) Herstellung der Ausgangsmaterialien

Beispiel A: Herstellung eines aliphatischen, verzweigten $C_{17}$-Alkohols $R^1$-OH mit einem Verzweigungsgrad von 3,1

Olefinologomerisierung:

In einem isotherm betriebenen Reaktor einer Länge von etwa 1,5 m und eines Durchmessers von 30 mm wurde bei 20 bar und 80 °C Raffinat der nachstehenden Zusammensetzungen an einem heterogenen Katalysator umgesetzt.

| | |
|---|---|
| i-Butan: | 3 Gew.-% |
| n-Butan: | 15 Gew.-% |
| i-Buten: | 2 Gew.-% |
| Buten-1: | 30 Gew.-% |
| Buten-2-trans: | 32 Gew.-% |
| Buten-2-cis: | 18 Gew.-% |

Als Katalysator diente ein Material, das gemäß der DE-A-43 39 713 in Form von Tabletten (5 mm x 5 mm) hergestellt worden war. Die Zusammensetzung in Gew.-% der Aktivkomponenten war: 50 Gew.-% NiO, 12,5 Gew.-% $TiO_2$, 33,5 Gew.-% $SiO_2$, 4 Gew.-% $Al_2O_3$. Der Durchsatz betrug 0,75 kg Raffinat II/(I (Kat) x h). Man arbeitete ohne Rückführung von $C_4$-Kohlenwasserstoffen. Der $C_4$-Umsatz, bezogen auf die im Raffinat II enthaltenen Butene, betrug 52,0 Gew.-%.

Die Selektivität in Gew.-% war wie folgt: $C_8$: 76,9; $C_{12}$: 18,4 und $C_{16+}$: 4,7.

Destillation des $C_{16+}$-Gemischs:

Das rohe $C_{16+}$-Gemisch wurde in einer technischen Destillationsanlage bestehend aus zwei Kolonnen mit je ca. 15 m Packungshöhe (250 $m^2/m^3$) destilliert. Dabei wurden in der ersten Kolonne (Vorlaufkolonne) noch enthaltene Leichtsieder (vor allem $C_{12}$-Olefine) über Kopf genommen. In der zweiten Kolonne (Hauptlaufkolonne) wurde über Kopf das $C_{16}$-Olefin mit einer Reinheit von > 99 % abgenommen, während die $C_{20+}$-Olefine im Sumpf abgetrennt wurden.

Die beiden Kolonnen wurden mit folgenden Parametern betrieben:

| | Vorlaufkolonne | Hauptlaufkolonne |
|---|---|---|
| Kopftemperatur | 135 °C | 165 °C |
| Sumpftemperatur | 180-182 °C | 225 - 230 °C |
| Druck (Kopf) | 85 mbar | 60 mbar |
| Druckverlust über Packung | ca. 5 mbar | ca. 50 mbar |
| Zulauf | 2700 kg/h | 2500 kg/h |
| Kopfabzug | 200 kg/h | 1700 kg/h |
| Rücklauf | 850 kg/h | 3000 kg/h |
| Sumpf | 2500 kg/h | 800 kg/h |

Hydroformylierung:

Die in EP 1204624 beschriebene Hydroformylierungsanlage wurde kontinuierlich mit 2,2 t/h $C_{16}$-Olefin und 0,2

t/h einer wässrigen Cobaltsalzlösung beschickt. Dabei wurden im Reaktor folgende Bedingungen eingestellt:

| | |
|---|---|
| Cobaltkonzentration | 0,10 Gew.-% |
| Temperatur | 185 °C |
| Druck ($CO/H_2$ ca. 1:1) | 280 bar |

Der Austrag der Hydroformylierung wurde, wie in EP 1204624 beschrieben, oxidativ entcobaltet und anschließend in der in DE 10036172 beschriebenen Hydrieranlage am dort beschriebenen Co/Cu/Mo-Katalysator zum Alkohol hydriert. Dabei wurden folgende Parameter eingestellt:

| | |
|---|---|
| Temperatur | 160 °C |
| Druck ($H_2$) | 280 bar |

Der so erhaltene Rohalkohol wurde in der oben beschriebenen Destillationsanlage unter folgenden Bedingungen zum Reinalkohol aufgereinigt.

| | Vorlaufkolonne | Hauptlaufkolonne |
|---|---|---|
| Kopftemperatur | 155 °C | 214 °C |
| Sumpftemperatur | 222 °C | 235 °C |
| Druck (Kopf) | 60 mbar | 60 mbar |
| Druckverlust über Packung | 20 mbar | 20 mbar |
| Zulauf | 2450 kg/h | 2000 kg/h |
| Kopfabzug | 450 kg/h | 1800 kg/h |
| Rücklauf | 850 kg/h | 900 kg/h |
| Sumpf | 2000 kg/h | 200 kg/h |

Vorschrift zur Bestimmung des Iso-Index des $C_{17}$-Alkoholgemischs über $^1$H-NMR: Ca. 20 mg $C_{17}$-Alkoholgemisch werden in 0,4 ml $CDCl_3$ gelöst und eine kleine Menge TMS zur Frequenzreferierung zugegeben. Danach wird die Lösung mit 0,2 ml TAI versetzt, in ein 5 mm NMR-Röhrchen gefüllt und im NMR-Spektrometer vermessen.

Messbedingungen:

Spektrometerfrequenz: 400 MHZ
Relaxationsdelay: 10 s
Pulswinkel: 30°
Aufgenommene Datenpunkte: 64 K
Scanzahl: 64
Transformierte Datenpunkte 64 K
Exponentialmultiplikation: 0,2 Hz

Nach Fouriertransformation, automatischer Phasen- und Basislinienkorrektur erfolgt eine manuelle Integration der Bereiche 4,7 bis 3,7 ppm (alle mit TAI veresterten primären Alkohole) und 2,4 bis - 0,4 ppm (alle Methyl-, Methylen- und Methinprotonen). Dabei werden die Integralphasen nullter Ordnung so gewählt, dass Anfang und Ende der Integralkurven im Wesentlichen horizontal verlaufen. Die Signale < 1 ppm werden den Methylgruppen zugeordnet.
Der so bestimmte Iso-Index beträgt: 3,1

II) <u>Herstellung von Tensiden</u>

<u>Beispiel 1: Herstellung eines nichtionischen Tensids</u> <u>(i$C_{17}$-Alkohol + 10 Ethylenoxid per KOH-Katalyse)</u>

Der verzweigte $C_{17}H_{35}$-Alkohol gemäß Beispiel A (250.4 g, 1.019 mol) wird mit KOH-Lösung (50%ig, 4.2 g, 0.037 mol) in einem 2l-Druckautoklaven der Firma Mettler versetzt und 3 h bei 100°C und 15 mbar entwässert. Anschließend wird zweimal mit Stickstoff inertisiert (bis 5 bar), ein Vordruck von 1 bar eingestellt und auf 130°C erwärmt. Innerhalb

von 4.5 h wird bis zu einem maximalen Druck von 7 bar Ethylenoxid (449 g, 10.19 mol) zudosiert und nach beendeter Zugabe noch 3 h nachgerührt. Abschließend wird die Verbindung im Vakuum (15 mbar) entgast, mit Ambosol (3 Gewichtsprozent) versetzt und filtriert.
Man erhält $iC_{17}$ - 10 EO (Auswage 700g, Theorie 707 g; OH-Zahl 78.2 mg KOH/g, Theorie 81.8 mg KOH/g) als klare Flüssigkeit.
Die Molmassenverteilung des Tensids wurde mittels Size Exclusion Chromatography bestimmt.

Beispiel 2: Herstellung eines nichtionischen Tensids ($iC_{17}$-Alkohol + 10 Ethylenoxid per DMC-Katalyse)

Der verzweigte $C_{17}H_{35}$-Alkohol gemäß Beispiel A (308.4 g, 1.255 mol) wird mit DMC-Katalysator (Zn-Co-Cyanid-Komplex, 0.86 g) per Ultraturax vermischt, in einem 2l Druckautoklaven der Firma Mettler überführt und 2 h bei 110°C und <10 mbar entwässert. Anschließend wird zweimal mit Stickstoff inertisiert (bis 5 bar), ein Vordruck von 1 bar eingestellt und auf 130°C erwärmt. Innerhalb von 5.2 h wird bis zu einem maximalen Druck von 7 bar Ethylenoxid (552 g, 12.55 mol) zudosiert und nach beendeter Zugabe noch 4 h nachgerührt.
Abschließend wird das Produkt im Vakuum (15 mbar) entgast und filtriert.
Man erhält $iC_{17}$ - 10 EO (Auswage 857g, Theorie 861 g; OH-Zahl 81.1 mg KOH/g, Theorie 81.8 mg KOH/g) als klare Flüssigkeit.
Die Molmassenverteilung des Tensids wurde mittels Size Exclusion Chromatography bestimmt. Das per DMC-Katalyse hergestellte Tensid wies eine signifikant engere Molmassenverteilung auf als das per KOH-Katalyse hergestellte Tensid gemäß Beispiel 3.

Beispiel 3: Herstellung eines nichtionischen Tensids ($iC_{17}$-Alkohol + 2 Ethylenoxid per DMC-Katalyse)

Der verzweigte $C_{17}H_{35}$-Alkohol gemäß Beispiel A (477.7 g, 1.944 mol) wird mit DMC-Katalysator (Zn-Co-Cyanid-Komplex, 0.65 g) per Ultraturax vermischt, in einem 2l Druckautoklaven der Firma Mettler überführt und 2 h bei 110°C und <10 mbar entwässert. Anschließend wird zweimal mit Stickstoff inertisiert (bis 5 bar), ein Vordruck von 1 bar eingestellt und auf 130°C erwärmt. Innerhalb von 1.2 h wird bis zu einem maximalen Druck von 7 bar Ethylenoxid (171.1 g, 3.888 mol) zudosiert und nach beendeter Zugabe noch 10 h nachgerührt.
Abschließend wird das Produkt im Vakuum (15 mbar) entgast und filtriert. Man erhält $iC_{17}$ - 2 EO (Auswage 641g, Theorie 649 g; OH-Zahl 171 mg KOH/g, Theorie 168.1 mg KOH/g) als klare Flüssigkeit.

Beispiel 4: Herstellung eines ionischen Tensids ($iC_{17}$-Alkohol-2 EO-$SO_3H$)

1. Stufe

$iC_{17}$ - 2 EO (98 g, 0.3 mol) aus Beispiel 1 wird in einem 500 ml Mehrhalskolben mit KPG=Rührer, Rückflusskühler, Gaseinleitungsrohr und Temperaturfühler auf 10°C abgekühlt und tropfenweise mit Thionylchlorid (39.2 g, 0.33 mol) bei dieser Temperatur versetzt. Nach 1 h Rühren bei 20°C wird ein $N_2$-Strom durch die Lösung geleitet und langsam auf 60°C erwärmt. Anschließend wird für 3 h bei 110°C gerührt. Eine titrimetrische Bestimmung des Chloridionengehaltes (mit $AgNO_3$) zeigte einen vollständigen Umsatz sowie Entfernung von HCl an. Die Struktur $iC_{17}$ - 2 EO - Cl wurde spektroskopisch (IR, 1H-NMR bestätigt)

2. Stufe

$iC_{17}$ - 2 EO - Cl (52.82 g, 0.15 mol) wird in einem 300ml-Autoklaven mit iPrOH (25 g), Natriumsulfit (20.8 g, 0.165 mol), destilliertem Wasser (78 g) und Natronlauge (50%ig, 0.75 g) vermischt. Nach Spülung mit $N_2$ wird bei 500 Umdrehungen pro min auf 160°C aufgeheizt, 30 h bei dieser Temperatur gerührt und wieder auf Raumtemperatur abgekühlt. Eine titrimetrische Bestimmung des Chloridionengehaltes (mit $AgNO_3$) zeigte einen vollständigen Umsatz. Anschließend wird vom Lösungsmittel befreit. Man erhält $iC_{17}$ - 2 EO - $SO_3H$

Vergleichsbeispiel 1: Nichtionisches Tensid auf Basis eines Arylalkylalkohols (Dodecylphenol + 10 EO per KOH-Katalyse)

4-Dodecylphenol (209.4 g, 0.798 mol; Aldrich) wird mit KOH-Lösung (50%ig, 3.36 g, 0.03 mol) in einem 2l Druckautoklaven der Firma Labmax versetzt und 2 h bei 100°C und 15 mbar entwässert. Anschließend wird zweimal mit Stickstoff inertisiert (bis 5 bar), ein Vordruck von 1 bar eingestellt und auf 130°C erwärmt. Innerhalb von 3 h wird bis zu einem maximalen Druck von 7 bar Ethylenoxid (351 g, 7.98 mol) zudosiert und nach beendeter Zugabe noch 5 h nachgerührt.
Abschließend wird die Verbindung im Vakuum (15 mbar) entgast, mit Ambosol (3 Gewichtsprozent) versetzt und filtriert.

Man erhält Dodecylphenol - 10 EO (Auswage 560g, Theorie 561.6 g; OH-Zahl 82.8 mg KOH/g, Theorie 79.9 mg KOH/g) als klare Flüssigkeit.

Vergleichsbeispiel 2: Nichtionisches Tensid auf Basis eines Arylalkylalkohols (Dodecylphenol + 13 EO per KOH-Katalyse)

Es wurde wie in Vergleichsbeispiel 1 vorgegangen, nur wurde ein Ethoxylierungsrgrad von 13 eingestellt.

Vergleichsbeispiel 3: Nichtionisches Tensid auf Basis eines linearen Alkohols (C-$_{16}$-$C_{18}$-Fettalkohol + 10 EO per KOH-Katalyse)

$C_{16}$-$C_{18}$-Fettalkohol (403 g, 1.586 mol) wird mit KOH-Lösung (50%ig, 6.6 g, 0.057 mol) in einem 2l Druckautoklaven versetzt und 2 h bei 95°C und 15 mbar entwässert. Anschließend wird zweimal mit Stickstoff inertisiert (bis 5 bar), ein Vordruck von 1 bar eingestellt und auf 130°C erwärmt. Innerhalb von 3 h wird bis zu einem maximalen Druck von 8 bar Ethylenoxid (698 g, 15.86 mol) zudosiert und nach beendeter Zugabe noch 5 h nachgerührt.

Abschließend wird die Verbindung im Vakuum (15 mbar) entgast, mit Ambosol (3 Gewichtsprozent) versetzt und filtriert. Man erhält C16C18-Fettalkohol -10 EO (Auswage 1080g, Theorie 1108 g; OH-Zahl 89.2 mg KOH/g, Theorie 80.8 mg KOH/g) als Feststoff.

Vergleichsbeispiel 4: Nichtionisches Tensid auf Basis 2-Methylhexadecan-1-ol (2-Methylhexadecan-1-ol + 10 EO per KOH-Katalyse)

1. Stufe

Zu einer Lösung von Palmitinsäuremethylester (32.4 g, 120 mmol) in trockenem Tetrahydrofuran (1500 ml) wurde bei -78°C eine 1 molare Lösung von Lithiumdiisopropylamid (300 ml, 300 mmol) in Tetrahydrofuran unter Stickstoffatmosphäre getropft. Nach Zugabe von DMPU (57.2 g, 447 mmol) wurde die Lösung auf -20°C erwärmt und 1 h bei dieser Temperatur gerührt. Nach erneuter Abkühlung auf -78°C wurde Methyljodid (306 g, 2150 mmol) zugetropft und auf 20°C erwärmt. Nach Zugabe von gesättigter NH4Cl-Lösung (1000 ml) und Phasenseparation wurde mit Essigester (3 x 1000 ml) extrahiert, die vereinigten organischen Phasen über Natriumsulfat getrocknet und im Vakuum vom Lösungsmittel befreit. Das Rohgemisch wurde per Säulenchromatographie an Kieselgel gereinigt. Man erhielt den methylierten Pälmitinsäuremethylester in 94% Ausbeute (32 g).

2. Stufe

Zu einer Lösung von Lithiumalumniumhydrid (84 g, 2210 mmol) in Tetrahydrofuran (3500 ml) wurde das Endprodukt aus Stufe 1 (210 g, 740 mmol) bei 20°C gegeben und 24 h bei dieser Temperatur gerührt. Man erwärmte auf Rückfluß bis im IR kein Signal einer Carbonylgruppe mehr zu sehen war. Nach Abkühlung auf 20°C wurde solange Na2SO4 zugegeben bis kein Wasserstoff mehr entstand. Nach Filtration wurde im Vakuum vom Lösungsmittel befreit und man erhielt den Alkohol in einer Ausbeute von 92.5% (175 g). Die Analytik per Gaschromatographie und $^1$H-NMR-Spektroskopie ergab, dass der erhaltene Alkohol zu 87% aus 2-Methylhexadekan-1-ol, 11 % 2,2-Dimethylhexadekan-1-ol und 2% Hexadekan-1-ol besteht.

3. Stufe

2-Methylhexadekan-1-ol (40 g, 0.156 mol) wird mit KOH-Lösung (50%ig, 0.6 g, 0.006 mol) in einem 300ml Druckautoklaven versetzt und 2 h bei 100°C und 15 mbar entwässert. Anschließend wird dreimal mit Stickstoff inertisiert (bis 3 bar), ein Vordruck von 1 bar eingestellt und auf 130°C erwärmt. Innerhalb von 50 min wird bis zu einem maximalen Druck von 8 bar Ethylenoxid (68.6 g, 1.56 mol) zudosiert und nach beendeter Zugabe noch 5 h nachgerührt.

Abschließend wird die Verbindung im Vakuum (15 mbar) entgast, mit Ambosol (3 Gewichtsprozent) versetzt und filtriert. Man erhält 2-Methylhexadekan-1-ol - 10 EO (Auswage 102 g, Theorie 109 g. Die Struktur wurde per $^1$H-NMR-Spektroskopie sowie Size-Exclusion-Chromatograhy (SEC) bestätigt.

III) Anwendungstechnische Tests

Mit den erhaltenen Tensiden wurden die folgenden Tests durchgeführt, um deren Eignung zur tertiären Erdölförderung zu bewerten.

Beschreibung der Messmethoden

Ermittlung von SP*

a) Prinzip der Messung:

Die Grenzflächenspannung zwischen Wasser und Öl wurde in bekannter Art und Weise über die Messung des Solubilisationsparameters SP* bestimmt. Die Bestimmung der Grenzflächenspannung über die Bestimmung des Solubilisationsparameters SP* ist eine in der Fachwelt akzeptierte Methode zur näherungsweisen Bestimmung der Grenzflächenspannung. Der Solubilisationsparameter SP *gibt an, wieviel ml Öl pro ml eingesetztem Tensid in einer Mikroemulsion (Windsor Typ III) gelöst wird. Die Grenzflächenspannung $\sigma$ (interfacial tension; IFT) kann hieraus über die Näherungsformel IFT $\approx 0.3/(SP^*)^2$ errechnet werden, falls gleiche Volumina von Wasser und Öl eingesetzt werden (C. Huh, J. Coll. Interf. Sc., Vol. 71, No. 2 (1979)).

b) Arbeitsvorschrift

Zur Bestimmung des SP* wird ein 100 ml Messzylinder mit Magnetrührfisch mit 20 ml Öl und 20 ml Wasser befüllt. Dazu werden 5 Gewichtsprozent bzw. 2.5 Gewichtsprozent Tensid (letzteres falls ein SP* > 10 bestimmt werden soll) gegeben. Anschließend wird die Temperatur von 20 auf 90°C schrittweise erhöht, und es wird beobachtet, in welchem Temperaturfenster sich eine Mikroemulsion bildete.

Die Ausbildung der Mikroemulsion kann visuell beobachtet werden oder auch mit Hilfe von Leitfähigkeitsmessungen. Es bildet sich ein Dreiphasensystem aus (obere Phase Öl, mittlere Phase Mikroemulsion, untere Phase Wasser). Sind obere und untere Phase gleich groß und verändern sich über einen Zeitraum von 12 h auch nicht mehr, so hat man die optimale Temperatur ($T_{opt}$) der Mikroemulsion gefunden. Das Volumen der mittleren Phase wird bestimmt. Von diesem Volumen wird das Volumen an zugegebenem Tensid abgezogen. Der erhaltene Wert wird danach durch zwei geteilt. Dieses Volumen wird nun durch das Volumen an zugegebenem Tensid geteilt. Das Ergebnis wird als SP* notiert.

Die Art der zur Bestimmung von SP* eingesetzten Öls und Wassers wird je nach dem zu untersuchenden System bestimmt. Es kann einerseits Erdöl selbst eingesetzt werden , oder auch ein Modellöl wie beispielsweise Decan oder Hexadecan. Als Wasser kann sowohl reines Wasser eingesetzt werden, wie auch salines Wasser, um die Verhältnisse in der Erdölformation besser zu modellieren. Die Zusammensetzung der wässrigen Phase kann beispielsweise entsprechend der Zusammensetzung eines bestimmten Lagerstättenwassers eingestellt werden.

Angaben zu der verwendeten wässrigen Phase und der Ölphase finden sich unten bei der konkreten Beschreibung der Versuche.

Testergebnisse

Bestimmung der Löslichkeit der Tenside

Für die Löslichkeitstests wurde stark salzhaltiges Wasser eingesetzt (Salzgehalt in Gewichtsprozent: 13.2% NaCl, 4.26% $CaCl_2$, 1.05% $MgCl_2$, 0.03% $Na_2SO_4$), welches typisch für eine Erdöllagerstätte in Norddeutschland ist.

Die Salzlösung wurde jeweils mit 1 Gew. % Tensid versetz, und das Aussehen der Lösung bei verschiedenen Temperaturen bewertet. Die Ergebnisse sind in Tabelle 1 zusammengestellt. Das Löslichkeitsverhalten der Tenside aus Beispiel 1 und aus Vergleichsbeispiel 1 ist relativ ähnlich.

Bestimmung der Grenzflächenspannung (IFT)

Die Grenzflächenspannung wurde jeweils nach der oben beschriebenen allgemeinen Vorschrift bestimmt.

Als Öl wurde Decan eingesetzt und als wässrige Phase das auch bei den Löslichkeitsversuchen eingesetzte Salzwasser (Salzgehalt in Gewichtsprozent: 13.2% NaCl, 4.26% $CaCl_2$, 1.05% $MgCl_2$, 0.03% $Na_2SO_4$). Die Ergebnisse sind in Tabelle 2 zusammengefasst. $\Delta T$ gibt hierbei das Temperaturfenster an, innerhalb dessen die Mikroemulsion auftritt, und $T_{opt}$ die wie oben bestimmte optimale Temperatur.

Weiterhin wurden Tests mit Rohölen durchgeführt. Es wurden zwei verschiedene mittelschwere Rohöle unterschiedlicher Herkunft und Viskosität eingesetzt. Als wässrige Phase wurde jeweils eine Salzlösung eingesetzt, deren Zusammensetzung dem Lagerstättenwasser des verwendeten Rohöles entsprach. Einzelheiten sind in Tabelle 3 zusammengefasst. Als Versuchstemperatur wurde jeweils die entsprechende Lagerstättentemperatur verwendet. Die gemessenen Grenzflächenspannungen sind jeweils in Tabelle 4 zusammengefasst.

Die Ergebnisse zeigen, dass mit den erfindungsgemäßen Tensiden mit stark verzweigten aliphatischen Resten niedrigere Grenzflächenspannungen im System Wasser-Öl erzielt werden als mit anderen Tensiden.

Vergleich Grenzflächenspannung und Phasenseparationszeit und Löslichkeit ein Abhängigkeit des Verzweigungsgrades im Hydrophobteil von Tensiden

Die Grenzflächenspannung wurde jeweils nach der oben beschriebenen allgemeinen Vorschrift bestimmt.

Als Öl wurde Hexadecan eingesetzt und als wässrige Phase das auch bei den Löslichkeitsversuchen eingesetzte Salzwasser (Salzgehalt in Gewichtsprozent: 13.2% NaCl, 4.26% $CaCl_2$, 1.05% $MgCl_2$, 0.03% $Na_2SO_4$). Das Wasser: Öl - Verhältnis beträgt 1 : 1 (20 ml : 20 ml). Die Tensidkonzentration beträgt 2.5 Volumenprozent in Bezug auf das kombinierte Volumen aus Öl und Wasser.

Die Ergebnisse sind in Tabelle 5 zusammengefasst. $T_{opt}$ gibt die wie oben bestimmte optimale Temperatur an. In der letzten Spalte findet sich die Zeit für die Ausbildung der balancierten Mittelphase (Mikroemulsion). Diese Phasenseparationszeit t ist minimal falls eine balancierte Mikroemulsion vorliegt, d.h. dass gleiche Volumina an Öl und Wasser neben der Mittelphase vorliegen.

Eine schnelle Phasenseparationszeit ist erwünscht, damit sich möglichst rasch die Ölbank in der Formation ausbilden kann. Im Fall von Rohölen ist die Phasenseparation deutlich langsamer als bei entsprechenden Modellölen aus n-Alkanen (erfahrungsgemäß Faktor 50). In der Literatur finden sich Zusätze von kurzkettigen Alkoholen, welche aber deutlich die optimale Temperatur sowie die Grenzflächenspannung beeinflussen.

Die Löslichkeit wurde optisch bewertet anhand von 2.5 % Tensid im beschriebenen norddeutschem Wasser (Salzgehalt in Gewichtsprozent: 13.2% NaCl, 4.26% $CaCl_2$, 1.05% $MgCl_2$, 0.03% $Na_2SO_4$) bei verschiedenen Temperaturen. Die Ergebnisse sind in Tabelle 6 zusammengestellt.

Die Ergebnisse zeigen, dass mit den erfindungsgemäßen Tensiden mit stark verzweigten aliphatischen Resten zahlreiche Vorteile im Vergleich zu Tensiden mit niedrigeren Verzweigungsgraden erzielt werden können:

Es werden niedrigere Grenzflächenspannungen als bei Alkylphenyl-basierten Tensiden mit ähnlicher Hydrophob-hydrophil-Balance (zu erkennen an ähnlichem $T_{opt}$) erhalten (siehe Tabellen 2 und 4).

Äußerst geringe Phasenseparationszeiten. Wie Tabelle 5 zu entnehmen ist, beträgt die Phasenseparationszeit für das erfindungsgemäße Tensid bei $T_{opt}$. nur 2 min, während das lineare Tensid gemäß Vergleichsbeispiel 3 und das Tensid mit einem Verzweigungsgrad von nur 1 gemäß Vergleichsbeispiel 4 jeweils 80 min Phasenseparationszeit aufweisen.

Reduzierung der Phasenseparationszeiten unter Beibehaltung der niedrigen Grenzflächenspannung bei Zumischung von erfindungsgemäßen Tensiden zu Tensiden, welche niedrige Grenzflächenspannung aber hohe Phasenseparationszeiten aufweisen. Synergistische Wirkung wie in Tabelle 5 zu erkennen

Die erfindungsgemäßen Tenside weisen bessere Löslichkeiten im System Tensid-Wasser auf, insbesondere bei niedrigeren Temperaturen wie in Tabelle 1 und 6 zu erkennen.

Tabelle 1: Ergebnisse des Löslichkeitstests

| Nr. | Tensid | RT | 60°C | 90°C |
|---|---|---|---|---|
| Vergleichsbeispiel 1 | Dodecylphenol -10 EO | trüb ohne Bodensatz | trüb ohne Bodensatz | trüb ohne Bodensatz |
| Beispiel 1 | $iC_{17}$ - 10 EO | klar | trüb ohne Bodensatz | kleine Ausflockungen |

Tabelle 2: Grenzflächenspannung im System Wasser-Dekan für verschiedene Tenside

| Nr. | Tensid | SP* | IFT [mN/m] bei $T_{opt}$ | $T_{opt}$[°C] | $\Delta$T[°C] |
|---|---|---|---|---|---|
| Vergleichsbeispiel 1 | Dodecylphenol - 10 EO (KOH-Katalyse) | 2.8 | 0.038 | 52.5 | 5 |
| Vergleichsbeispiel 2 | Dodecylphenol - 13 EO (KOH-Katalyse) | 1.1 | 0.248 | 69 | 16 |
| Beispiel 1 | $iC_{17}$ - 10 EO (KOH-Katalyse) | 8 | 0.005 | 66.6 | 2 |
| Beispiel 2 | $iC_{17}$ - 10 EO (DMC-Katalyse) | 11.5 | 0.002 | 63.2 | 1,5 |

Tabelle 3: Für die Tests verwendete Öle und wässrige Phasen

| | Förderort | Lagerstättentemperatur | Viskosität | Dichte bei 23°C [g/cm³] | Salze in der wässrigen Phase |
|---|---|---|---|---|---|
| Rohöl A | Norddeutschland | 54°C | 66 mPas (20°C) 17 mPas (50°C) | 0,885 | 13.2% NaCl, 4.26% $CaCl_2$, 1.05% $MgCl_2$, 0.03% $Na_2SO_4$ |
| Rohöl B | Oman | 69°C | 25 mPas (20°C) 8 mPas (50°C) | 0,873 | 16.5% NaCl, 6.08% $CaCl_2$ * 2 $H_2O$, 1.9% $MgCl_2$ * 6 $H_2O$, 0.03% $Na_2SO_4$ |

Tabelle 4: Ergebnisse der Messungen der Grenzflächenspannung

| Rohöl | Eingesetztes Tensid | | SP* | IFT [mN/m] |
|---|---|---|---|---|
| | Nr. | Bezeichnung | | |
| Rohöl A | Vergleichsbeispiel 1 | Dodecylphenol - 10 EO | 2 | 0.075 |
| Rohöl A | Beispiel 1 | $iC_{17}$ - 10 EO | 3 | 0.033 |
| Rohöl B | Vergleichsbeispiel 1 | Dodecylphenol - 10 EO | nicht bestimmbar | nicht bestimmbar |
| Rohöl B | Beispiel 1 | $iC_{17}$ - 10 EO | 19 | 0.0008 |

Tabelle 5: Grenzflächenspannung und Phasenseparation im System Norddeutsches Wasser - Hexadecan für verschiedene Tenside

| Eingesetztes Tensid | | Verzweigungsgrad | SP* | IFT [mN/m] bei $T_{opt}$ | $T_{opt}$ [°C] | t [min] bei $T_{opt}$ |
|---|---|---|---|---|---|---|
| Nr. | Bezeichnung | | | | | |
| Vergleichsbeispiel 3 | C16C18-Fettalkohol - 10 EO (KOH-Katalyse) | 0 | 8 | 0.005 | 59.4 | 80 |
| Vergleichsbeispiel 4 | 2-Methylhexadekanol - 10 EO (KOH-Katalyse) | ca. 1 | 7.25 | 0.005 | 58 | 80 |
| Beispiel 1 | $iC_{17}$ - 10 EO (KOH-Katalyse) | ca. 3.1 | 3 | 0.033 | 62.3 | 2 |
| Mischung aus Beispiel 1 und Vergleichsbeispiel 3 30: 70 | $iC_{17}$ - 10 EO (KOH-Katalyse) : C16C18-Fettalkohol -10 EO (KOH-Katalyse) Verhältnis 30: 70 | (0.3 x ca. 3.1) + (0.7 x 0) = ca. 1 | 6 | 0.008 | 60.1 | 5 |
| Mischung aus Vergleichsbeispiel 3 und Butylmonoglykol 50 : 50 | 2.5% $C_{16}$-$C_{18}$-Fettalkohol - 10 EO + 2.5% nC4 - 1 EO | 0 | 2.5 | 0.048 | 46.8 | 10 |

Tabelle 6: Ergebnisse des Löslichkeitstests

| Nr. | Tensid | RT | 50°C |
|---|---|---|---|
| Vergleichsbeispiel 3 | C16C18-Fettalkohol- 10 EO (KOH-Katalyse) | ausgeflockt | trüb ohne Bodensatz |

(fortgesetzt)

| Nr. | Tensid | RT | 50°C |
|---|---|---|---|
| Beispiel 1 | $iC_{17}$ - 10 EO | klar | trüb ohne Bodensatz |
| Vergleichsbeispiel 4 | 2-Methylhexadekanol - 10 EO (KOH-Katalyse) | trüb ohne Bodensatz | trüb ohne Bodensatz |
| Mischung aus Beispiel 1 und Vergleichsbeispiel 3 30: 70 | $iC_{17}$ - 10 EO (KOH-Katalyse): C16C18-Fettalkohol -10 EO (KOH-Katalyse) Verhältnis 30 : 70 | leicht trüb ohne Bodensatz | leicht trüb ohne Bodensatz |

**Patentansprüche**

1. Tenside der allgemeinen Formel $R^1$-X, wobei es sich bei $R^1$ um einen aliphatischen Alkylrest $C_{17}H_{35}$- und bei X um eine hydrophile Gruppe handelt, **dadurch gekennzeichnet dass** der mittlere Verzweigungsgrad des Restes $R^1$ 2,8 bis 3,7 beträgt, wobei der Verzweigungsgrad die Anzahl der Methylgruppen im Rest $R^1$ abzüglich 1 ist.

2. Tenside gemäß Anspruch 1, **dadurch gekennzeichnet, dass** der mittlere Verzweigungsgrad des Restes $R^1$ 3,01 bis 3,5 beträgt.

3. Tenside gemäß Anspruch 1 oder 2, **dadurch gekennzeichnet dass** es sich bei X um eine Gruppe ausgewählt aus der Gruppe von Sulfonatgruppen, Polyoxyalkylengruppen, anionisch modifizierten Polyoxyalkylengruppen, Glucosidgruppen, Aminoxidgruppen, kationische oder betainische Gruppen handelt.

4. Tenside gemäß Anspruch 1 oder 2, **dadurch gekennzeichnet, dass** es sich um Alkylalkoxylate (A) handelt, welche Alkoxy- und/oder Ethoxygruppen umfassen, und die allgemeine Formel

$$R^1O\text{-}(CH_2CH(R^2)O)_n(CH_2CH_2O)_m\text{-}H \qquad (I)$$

aufweisen, wobei

- $R^2$ für einen geradkettigen, verzweigten, aliphatischen oder aromatischen Kohlenwasserstoffrest mit 1 bis 10 Kohlenstoffatomen,
- n für Werte von 0 bis 15,
- m steht für Werte von 1 bis 20,
- sowie k = n + m für Werte von 1 bis 35 steht,

mit der Maßgabe, dass die Alkoxy- und Ethoxygruppen -sofern beide Arten von Gruppen vorhanden sind- statistisch, alternierend oder in Blockstruktur angeordnet sein können.

5. Tenside gemäß Anspruch 4, **dadurch gekennzeichnet, dass** m größer als n ist.

6. Tenside gemäß Anspruch 4 oder 5, **dadurch gekennzeichnet, dass** es sich bei $R^2$ um eine Methylgruppe handelt.

7. Tenside gemäß einem der Ansprüche 4 bis 6, **dadurch gekennzeichnet, dass** in der obigen Formel $n \geq 1$ und $m \geq 1$ ist, und es sich um ein Blockcopolymer handelt, bei der die Alkoxy- und Ethoxygruppen in der in Formel (I) angegebenen Reihenfolge angeordnet sind.

8. Tenside gemäß einem der Ansprüche 4 bis 7, **dadurch gekennzeichnet, dass** m für Werte von 5 bis 14 steht.

9. Tenside gemäß Anspruch 1 oder 2, **dadurch gekennzeichnet, dass** es sich um Alkylethersulfonate (B) handelt, welche Alkoxy- und/oder Ethoxygruppen umfassen, und die allgemeine Formel

$$R^1O\text{-}(CH_2CH(R^2)O)_{n'}(CH_2CH_2O)_{m'}\text{-}R^3\text{-}SO_3M \qquad (II),$$

aufweisen, wobei

- $R^2$ für einen geradkettigen, verzweigten, aliphatischen oder aromatischen Kohlenwasserstoffrest mit 1 bis 10 Kohlenstoffatomen,
- n' für Werte von 0 bis 15,
- m' steht für Werte von 1 bis 20,
- sowie k' = n' + m' für Werte von 1 bis 35,
- M für $H^+$ und/oder ein k-wertiges Gegenion 1/x $Y^{x+}$,
- $R^3$ für eine zweiwertige Kohlenwasserstoffgruppe mit 2 bis 12 Kohlenstoffatomen steht, welche optional funktionelle Gruppen als Substituenten aufweisen kann,

mit der Maßgabe, dass die Alkoxy- und Ethoxygruppen -sofern beide Arten von Gruppen vorhanden sind- statistisch, alternierend oder in Blockstruktur angeordnet sein können.

**10.** Tenside gemäß Anspruch 1 oder 2, **dadurch gekennzeichnet, dass** es sich um Alkylethercarboxylate (C) handelt, welche Alkoxy- und/oder Ethoxygruppen umfassen, und die allgemeine Formel

$$R^1O\text{-}(CH_2CH(R^2)O)_{n''}(CH_2CH_2O)_{m''}\text{-}R^5\text{-}COOM \qquad (III),$$

aufweisen, wobei

- $R^2$ für einen geradkettigen, verzweigten, aliphatischen oder aromatischen Kohlenwasserstoffrest mit 1 bis 10 Kohlenstoffatomen,
- n" für Werte von 0 bis 15,
- m" steht für Werte von 1 bis 20,
- sowie k" = n" + m" für Werte von 1 bis 35,
- M für $H^+$ und/oder ein k-wertiges Gegenion 1/x $Y^{x+}$,
- $R^5$ für eine zweiwertige Kohlenwasserstoffgruppe mit 1 bis 12 Kohlenstoffatomen steht,

mit der Maßgabe, dass die Alkoxy- und Ethoxygruppen -sofern beide Arten von Gruppen vorhanden sind- statistisch, alternierend oder in Blockstruktur angeordnet sein können.

**11.** Tenside gemäß Anspruch 1 oder 2, **dadurch gekennzeichnet, dass** es sich um Alkylethersulfate (D) handelt, welche Alkoxy- und/oder Ethoxygruppen umfassen, und die allgemeine Formel

$$R^1O\text{-}(CH_2CH(R^2)O)_{n'''}(CH_2CH_2O)_{m'''}\text{-}\ SO_3M \qquad (IV),$$

aufweisen, wobei

- $R^2$ für einen geradkettigen, verzweigten, aliphatischen oder aromatischen Kohlenwasserstoffrest mit 1 bis 10 Kohlenstoffatomen,
- n"' für Werte von 0 bis 15,
- m"' steht für Werte von 1 bis 20,
- sowie k'" = n'" + m'" für Werte von 1 bis 35,
- M für $H^+$ und/oder ein k-wertiges Gegenion 1/x $Y^{x+}$,

mit der Maßgabe, dass die Alkoxy- und Ethoxygruppen -sofern beide Arten von Gruppen vorhanden sind- statistisch, alternierend oder in Blockstruktur angeordnet sein können.

**12.** Tenside gemäß einem der Ansprüche 9 bis 11, **dadurch gekennzeichnet, dass** m' größer als n' ist bzw. dass m" größer als n" ist bzw. dass m'" größer als n'" ist.

**13.** Tenside gemäß einem der Ansprüche 9 bis 12, **dadurch gekennzeichnet, dass** es sich bei $R^2$ um eine Methylgruppe handelt.

**14.** Tenside gemäß einem der Ansprüche 9 bis 13, **dadurch gekennzeichnet, dass** in den Formeln (II) und (III) und (IV) n' bzw. n" bzw. n'" ≥ 1 und m' bzw. m" bzw. m'" ≥ 1 sind, und es sich um ein Blockcopolymer handelt, bei der die Alkoxy- und die Ethoxygruppen sowie die Sulfonsäuregruppe bzw. die Carboxygruppe bzw. die Sulfatgruppe in

der in Formel (II) bzw. (III) bzw. (IV) angegebenen Reihenfolge angeordnet sind

**15.** Tenside gemäß einem der Ansprüche 9 bis 14, **dadurch gekennzeichnet, dass** m' bzw. m" bzw. m'" für Werte von 1 bis 15 stehen.

**16.** Verwendung von Tensiden gemäß einem der Ansprüche 1 bis 17 zur tertiären Erdölförderung.

## Claims

**1.** A surfactant of the general formula $R^1$-X where $R^1$ is an aliphatic $C_{17}H_{35}$- alkyl radical and X is a hydrophilic group, wherein the mean degree of branching of the $R^1$ radical is from 2.8 to 3.7, where the degree of branching is the number of methyl groups in the $R^1$ radial minus 1.

**2.** The surfactant according to claim 1, wherein the mean degree of branching of the $R^1$ radical is from 3.01 to 3.5.

**3.** The surfactant according to claim 1 or 2, wherein X is a group selected from the group of sulfonate groups, polyoxyalkylene groups, anionically modified polyoxyalkylene groups, glucoside groups, amine oxide groups, cationic or betainic groups.

**4.** The surfactant according to claim 1 or 2, which comprises alkyl alkoxylates (A) which comprise alkoxy and/or ethoxy groups and are of the general formula

$$R^1O\text{-} (CH_2CH(R^2)O)_n(CH_2CH_2O)_m\text{-}H \qquad (I)$$

where

- $R^2$ is a straight-chain, branched, aliphatic or aromatic hydrocarbon radical having from 1 to 10 carbon atoms,
- n is from 0 to 15,
- m is from 1 to 20,
- and k = n + m for values from 1 to 35,

with the proviso that the alkoxy and ethoxy groups - where both types of groups are present - may be arranged randomly, alternately or in block structure.

**5.** The surfactant according to claim 4, wherein m is greater than n.

**6.** The surfactant according to claim 4 or 5, wherein $R^2$ is a methyl group.

**7.** The surfactant according to any one of claims 4 to 6, wherein, in the above formula, $n \geq 1$ and $m \geq 1$, and the surfactant is a block copolymer in which the alkoxy and ethoxy groups are arranged in the sequence specified in formula (I).

**8.** The surfactant according to any one of claims 4 to 7, wherein m is from 5 to 14.

**9.** The surfactant according to claim 1 or 2, which comprises alkyl ether sulfonates (B) which comprise alkoxy and/or ethoxy groups and are of the general formula

$$R^1O\text{-}(CH_2CH(R^2)O)_{n'}(CH_2CH_2O)_{m'}\text{-}R^3\text{-}SO_3M \qquad (II)$$

where

- $R^2$ is a straight-chain, branched, aliphatic or aromatic hydrocarbon radical having from 1 to 10 carbon atoms,
- n' is from 0 to 15,
- m' is from 1 to 20,
- and k' = n' + m' is from 1 to 35,
- M is $H^+$ and/or a k-valent counterion 1/x $Y^{x+}$,
- $R^3$ is a divalent hydrocarbon group which has from 2 to 12 carbon atoms and may optionally have functional

groups as substituents,

with the proviso that the alkoxy and ethoxy groups - where both types of groups are present - may be arranged randomly, alternately or in block structure.

**10.** The surfactant according to claim 1 or 2, which comprises alkyl ether carboxylates (C) which comprise alkoxy and/or ethoxy groups and are of the general formula

$$R^1O\text{-}(CH_2CH(R^2)O)_{n''}(CH_2CH_2O)_{m''}\text{-}R^5\text{-}COOM \qquad (III)$$

where

- $R^2$ is a straight-chain, branched, aliphatic or aromatic hydrocarbon radical having from 1 to 10 carbon atoms,
- n" is from 0 to 15,
- m" is from 1 to 20,
- and k" - n" + m" is from 1 to 35,
- M is $H^+$ and/or a k-valent counterion 1/x $Y^{x+}$,
- $R^5$ is a divalent hydrocarbon group having from 1 to 12 carbon atoms,

with the proviso that the alkoxy and ethoxy groups - where both types of groups are present - may be arranged randomly, alternately or in block structure.

**11.** The surfactant according to claim 1 or 2, which comprises alkyl ether sulfates (D) which comprise alkoxy and/or ethoxy groups and are of the general formula

$$R^1O\text{-}(CH_2CH(R^2)O)_{n'''}(CH_2CH_2O)_{m'''}\text{-}SO_3M \qquad (IV)$$

where

- $R^2$ is a straight-chain, branched, aliphatic or aromatic hydrocarbon radical having from 1 to 10 carbon atoms,
- n''' is from 0 to 15,
- ml'' is from 1 to 20,
- and k''' = n"' + m''' is from 1 to 35,
- M is $H^+$ and/or a k-valent counterion 1/x $Y^{x+}$,

with the proviso that the alkoxy and ethoxy groups - where both types of groups are present - may be arranged randomly, alternately or in block structure.

**12.** The surfactant according to any one of claims 9 to 11, wherein m' is greater than n' or m" is greater than n" or m"' is greater than n"'.

**13.** The surfactant according to any one of claims 9 to 12, wherein $R^2$ is a methyl group.

**14.** The surfactant according to any one of claims 9 to 13, wherein, in the formulae (II) and (III) and (IV), n' or n" or n''' is ≥ 1 and m' or m" or m"' is ≥ 1, and the surfactant is a block copolymer in which the alkoxy and the ethoxy groups and the sulfonic acid group or the carboxyl group or the sulfate group are arranged in the sequence specified in formula (II) or (III) or (IV).

**15.** The surfactant according to any one of claims 9 to 14, wherein m' or m" or m''' is from 1 to 15.

**16.** The use of surfactants according to any one of claims 1 to 17 for tertiary mineral oil extraction.

## Revendications

**1.** Tensioactifs de formule générale $R^1$-X, $R^1$ étant un radical alkyle aliphatique en $C_{17}H_{35}$ et X étant un groupe hydrophile, **caractérisés en ce que** le degré de ramification moyen du radical $R^1$ est de 2,8 à 3,7, le degré de ramification étant le nombre de groupes méthyle dans le radical $R^1$ moins 1.

**2.** Tensioactifs selon la revendication 1, **caractérisés en ce que** le degré de ramification moyen du radical $R^1$ est de 3,01 à 3,5.

**3.** Tensioactifs selon la revendication 1 ou 2, **caractérisés en ce que** X est un groupe choisi dans le groupe constitué par les groupes sulfonate, les groupes polyoxyalkylène, les groupes polyoxyalkylène modifiés anioniquement, les groupes glucoside, les groupes aminoxyde, les groupes cationiques ou bétaïniques.

**4.** Tensioactifs selon la revendication 1 ou 2, **caractérisés en ce qu'**il s'agit d'alcoxylates d'alkyle (A), qui comprennent des groupes alcoxy et/ou éthoxy, et qui présentent la formule générale

$$R^1O\text{-}(CH_2CH(R^2)O)_n(CH_2CN_2O)_m\text{-}H \qquad (I)$$

dans laquelle

- $R^2$ représente un radical hydrocarboné linéaire, ramifié, aliphatique ou aromatique de 1 à 10 atomes de carbone,
- n représente des valeurs de 0 à 15,
- m représente des valeurs de 1 à 20,
- et k = n + m représente des valeurs de 1 à 35,

à condition que les groupes alcoxy et éthoxy, si les deux types de groupes sont présents, puissent être agencés selon une structure statistique, alternée ou séquencée.

**5.** Tensioactifs selon la revendication 4, **caractérisés en ce que** m est supérieur à n.

**6.** Tensioactifs selon la revendication 4 ou 5, **caractérisés en ce que** $R^2$ est un groupe méthyle.

**7.** Tensioactifs selon l'une quelconque des revendications 4 à 6, **caractérisés en ce que**, dans la formule ci-dessus, $n \geq 1$ et $m \geq 1$, et il s'agit d'un copolymère séquencé dans lequel les groupes alcoxy et éthoxy sont agencés dans l'ordre indiqué dans la formule (I).

**8.** Tensioactifs selon l'une quelconque des revendications 4 à 7, **caractérisés en ce que** m représente des valeurs de 5 à 14.

**9.** Tensioactifs selon la revendication 1 ou 2, **caractérisés en ce qu'**il s'agit d'éther-sulfonates d'alkyle (B), qui comprennent des groupes alcoxy et/ou éthoxy, et qui présentent la formule générale

$$R^1O\text{-}(CH_2CH(R^2)O)_{n'}(CH_2CH_2O)_{m'}\text{-}R^3\text{-}SO_3M \qquad (II),$$

dans laquelle

- $R^2$ représente un radical hydrocarboné linéaire, ramifié, aliphatique ou aromatique de 1 à 10 atomes de carbone,
- n' représente des valeurs de 0 à 15,
- m' représente des valeurs de 1 à 20,
- et k' = n' + m' représente des valeurs de 1 à 35,
- M représente $H^+$ et/ou un contre-ion k-valent 1/x $Y^{x+}$,
- $R^3$ représente un groupe hydrocarboné bivalent de 2 à 12 atomes de carbone, qui peut éventuellement comprendre des groupes fonctionnels en tant que substituants,

à condition que les groupes alcoxy et éthoxy, si les deux types de groupes sont présents, puissent être agencés selon une structure statistique, alternée ou séquencée.

**10.** Tensioactifs selon la revendication 1 ou 2, **caractérisés en ce qu'**il s'agit d'éther-carboxylates d'alkyle (C), qui comprennent des groupes alcoxy et/ou éthoxy, et qui présentent la formule générale

$$R^1O\text{-}(CH_2CH(R^2)O)_{n''}(CH_2CH_2O)_{m''}R^5\text{-}COOM \qquad (III),$$

dans laquelle

- $R^2$ représente un radical hydrocarboné linéaire, ramifié, aliphatique ou aromatique de 1 à 10 atomes de carbone,
- n" représente des valeurs de 0 à 15,
- m" représente des valeurs de 1 à 20,
- et k'' = n" + m" représente des valeurs de 1 à 35,
- M représente $H^+$ et/ou un contre-ion k-valent 1/x $Y^{x+}$,
- $R^5$ représente un groupe hydrocarboné bivalent de 1 à 12 atomes de carbone,

à condition que les groupes alcoxy et éthoxy, si les deux types de groupes sont présents, puissent être agencés selon une structure statistique, alternée ou séquencée.

**11.** Tensioactifs selon la revendication 1 ou 2, **caractérisés en ce qu'**il s'agit d'éther-sulfates d'alkyle (D), qui comprennent des groupes alcoxy et/ou éthoxy, et qui présentent la formule générale

$$R^1O\text{-}(CH_2CH(R^2)O)_{n'''}(CH_2CH_2O)_{m'''}\text{ - }SO_3M \qquad \text{(IV)},$$

dans laquelle

- $R^2$ représente un radical hydrocarboné linéaire, ramifié, aliphatique ou aromatique de 1 à 10 atomes de carbone,
- n''' représente des valeurs de 0 à 15,
- m''' représente des valeurs de 1 à 20,
- et k''' = n''' + m''' représente des valeurs de 1 à 35,
- M représente $H^+$ et/ou un contre-ion k-valent 1/x $Y^{x+}$,

à condition que les groupes alcoxy et éthoxy, si les deux types de groupes sont présents, puissent être agencés selon une structure statistique, alternée ou séquencée.

**12.** Tensioactifs selon l'une quelconque des revendications 9 à 11, **caractérisés en ce que** m' est supérieur à n' ou **en ce que** m'' est supérieur à n'' ou en ce que m"' est supérieur à n"'.

**13.** Tensioactifs selon l'une quelconque des revendications 9 à 12, **caractérisés en ce que** $R^2$ est un groupe méthyle.

**14.** Tensioactifs selon l'une quelconque des revendications 9 à 13, **caractérisés en ce que**, dans les formules (II) et (III) et (IV), n' ou n" ou n''' ≥ 1 et m' ou m'' ou m''' ≥ 1, et il s'agit d'un copolymère séquencé dans lequel les groupes alcoxy et éthoxy, ainsi que le groupe acide sulfonique ou le groupe carboxy ou le groupe sulfate sont agencés dans l'ordre indiqué dans la formule (II) ou (III) ou (IV).

**15.** Tensioactifs selon l'une quelconque des revendications 9 à 14, **caractérisés en ce que** m' ou m" ou m"' représente des valeurs de 1 à 15.

**16.** Utilisation de tensioactifs selon l'une quelconque des revendications 1 à 17 pour l'extraction de pétrole tertiaire.

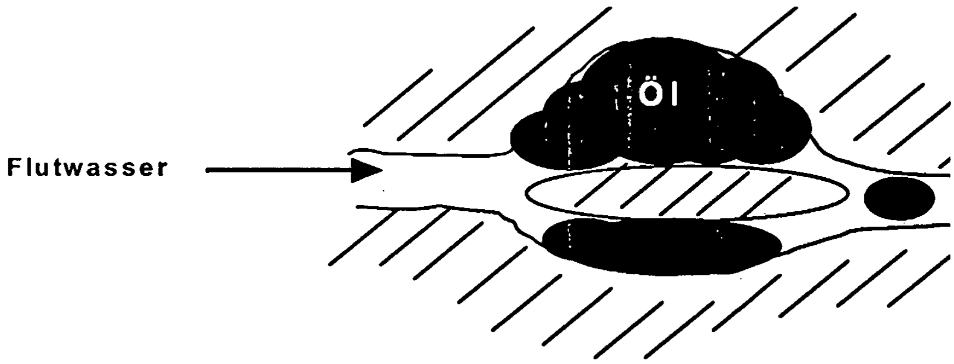


Fig. 1

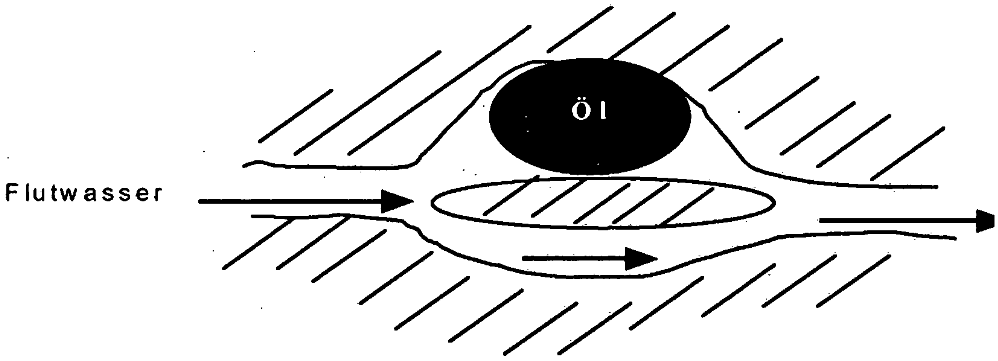


Fig. 2

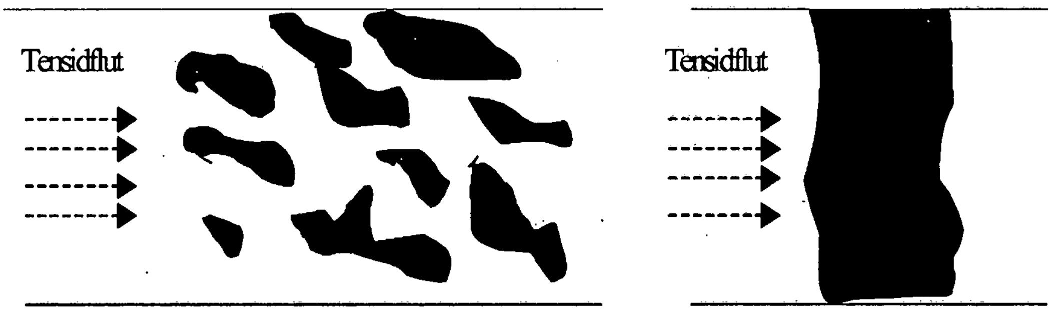


(A) (B)

Fig. 3

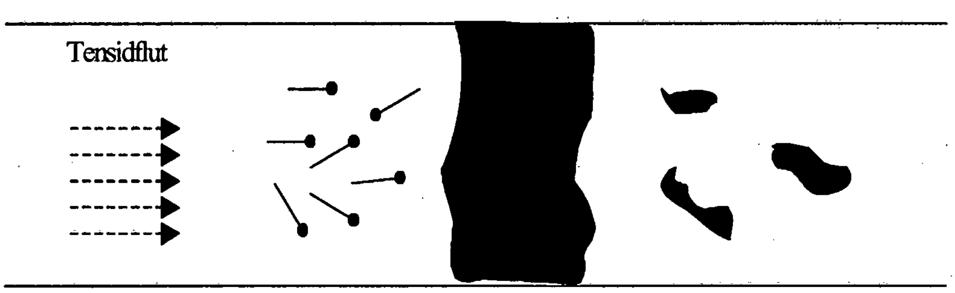


Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3811505 A
- US 3811504 A
- US 3508621 A
- US 3811507 A
- US 3890239 A
- US 4077471 A
- EP 003183 B1
- US 3675716 A
- US 5849960 A
- EP 958267 B1
- US 6222077 B
- US 20060185845 A1
- US 2006018486 A
- EP 81041 A
- DE 1568542
- DE 4339713 A
- WO 9514647 A
- DE 19957173 A
- EP 1457475 A
- DE 4339713
- DE 4325237 A1
- DE 10243361 A1
- EP 311961 A1
- WO 2006131541 A
- EP 1204624 A
- DE 10036172


### In der Beschreibung aufgeführte Nicht-Patentliteratur


- *Journal of Petroleum Science and Engineering,* 1998, vol. 19, 265-280
- **C. MELROSE ; C.F. BRANDNER.** *J. Canadian Petr. Techn.,* Oktober 1974, 58
- **K. WEISSERMEL ; H.-J. ARPE.** Industrielle organische Chemie. VCH-Verlagsgesellschaft, 1994, 76-81
- *Catalysis Today,* 1990, vol. 6 (329), 336-338
- **BELLER et al.** *Journal of Molecular Catalysis A,* 1995, vol. 104, 17-85
- **C. HUH.** *J. Coll. Interf. Sc.,* 1979, vol. 71 (2